# EUROPÄISCHE PATENTSCHRIFT

(11) **EP 4 143 784 B1**
(45) Veröffentlichungstag und Bekanntmachung des Hinweises auf die Patenterteilung: **18.06.2025**
(21) Anmeldenummer: 21820577.1
(22) Anmeldetag: 29.11.2021
(51) Int. Cl.: G06T 7/00, G01R 33/56, G16H 50/50

(54) **MASCHINELLES LERNEN IM BEREICH DER KONTRASTMITTELVERSTÄRKTEN RADIOLOGIE**
MACHINE LEARNING IN THE FIELD OF RADIOLOGY WITH CONTRAST AGENT
APPRENTISSAGE AUTOMATIQUE DANS LE DOMAINE DE LA RADIOLOGIE ASSISTÉE PAR CONTRASTE

(30) Priorität: 09.03.2021 EP 21161545; 12.04.2021 EP 21167803
(43) Veröffentlichungstag der Anmeldung: 08.03.2023
(73) Patentinhaber: Bayer Aktiengesellschaft, 51373 Leverkusen (DE)
(72) Erfinder: LENGA, Matthias, 51373 Leverkusen (DE); PURTORAB, Marvin, 30655 Hannover (DE)
(74) Vertreter: BIP Patents
(86) Internationale Anmeldenummer: PCT/EP2021/083325
(87) Internationale Veröffentlichungsnummer: WO 2022/189015

(56) Entgegenhaltungen:
- US-A1- 2014 376 794

## Beschreibung

Die vorliegende Erfindung befasst sich mit dem technischen Gebiet der Erzeugung von künstlichen kontrastmittelverstärkten radiologischen Aufnahmen mittels Methoden des maschinellen Lernens.

Die Radiologie ist ein medizinisches Fachgebiet, das sich mit der Bildgebung zu diagnostischen und therapeutischen Zwecken befasst.

Während in der medizinischen Bildgebung früher in erster Linie Röntgenstrahlung und für die Röntgenstrahlung empfindliche Filme zum Einsatz kamen, gehören zur Radiologie heutzutage mehrere verschiedene Bildgebungsverfahren wie beispielsweise Computertomographie (CT), Magnetresonanztomographie (MRT) oder Sonographie.

Bei all diesen Verfahren können Substanzen eingesetzt werden, die die Darstellung bzw. Abgrenzung bestimmter Strukturen in einem Untersuchungsobjekt erleichtern. Diese Substanzen bezeichnet man als Kontrastmittel.

In der Computertomographie werden meist iodhaltige Lösungen als Kontrastmittel eingesetzt. In der Magnetresonanztomographie (MRT) werden üblicherweise superparamagnetische Substanzen (z.B. Eisenoxidnanopartikel, superparamagnetische Eisen-Platin-Partikel (SIPPs)) oder paramagnetische Substanzen (z.B. Gadolinium-Chelate, Mangan-Chelate) als Kontrastmittel verwendet.

Nach ihrem Verteilungsmuster im Gewebe können Kontrastmittel grob in die folgenden Kategorien eingeteilt werden: extrazelluläre, intrazelluläre und intravaskuläre Kontrastmittel.

Zu den extrazellulären MRT-Kontrastmitteln zählen beispielsweise die Gadolinium-Chelate Gadobutrol (Gadovist^{®}), Gadoteridol (Prohance^{®}), Gadotersäure (Dotarem^{®}), Gadopentetsäure (Magnevist^{®}) und Gadodiamid (Omnican^{®}). Die stark hydrophilen Eigenschaften dieser Gadolinium-Chelate und ihr niedriges Molekulargewicht führen nach intravenöser Applikation zu einer raschen Diffusion in den interstitiellen Raum. Sie werden nach einer gewissen, vergleichsweise kurzen Zeitspanne der Zirkulation im Blutkreislauf über die Nieren ausgeschieden.

Intrazelluläre Kontrastmittel werden zu gewissen Anteilen in die Zellen von Geweben aufgenommen und anschließend wieder ausgeschieden.

Intrazelluläre MRT-Kontrastmittel auf der Basis der Gadoxetsäure zeichnen sich beispielsweise dadurch aus, dass sie anteilig spezifisch von Leberzellen, den Hepatozyten, aufgenommen werden, sich im Funktionsgewebe (Parenchym) anreichern und die Kontraste in gesundem Lebergewebe verstärken, bevor sie anschließend über Galle in die Faeces ausgeschieden werden. Beispiele für derartige Kontrastmittel auf der Basis der Gadoxetsäure sind in US 6,039,931A beschrieben; sie sind kommerziell zum Beispiel unter den Markennamen Primovist^{®} und Eovist^{®} erhältlich. Ein weiteres MRT-Kontrastmittel mit einer geringeren Aufnahme in die Hepatozyten ist Gadobenate Dimeglumine (Multihance^{®}).

Der kontrastverstärkende Effekt von Primovist^{®}/Eovist^{®} wird durch den stabilen Gadoliniumkomplex Gd-EOB-DTPA (Gadolinium-Ethoxybenzyl-Diethylentriamin-Pentaessigsäure) vermittelt. DTPA bildet mit dem paramagnetischen Gadoliniumion einen Komplex, der eine extrem hohe thermodynamische Stabilität aufweist. Der Ethoxybenzylrest (EOB) ist der Vermittler der hepatobiliären Aufnahme des Kontrastmittels.

Intravaskuläre Kontrastmittel zeichnen sich durch eine im Vergleich zu den extrazellulären Kontrastmitteln deutlich längere Verweilzeit im Blutkreislauf aus. Gadofosveset ist beispielsweise ein intravaskuläres MRT-Kontrastmittel auf Gadoliniumbasis. Es wurde als Trinatriumsalz-Monohydratform verwendet (Ablavar^{®}). Es bindet an Serumalbumin, wodurch die lange Verweilzeit des Kontrastmittels im Blutkreislauf erreicht wird (Halbwertzeit im Blut etwa 17 Stunden).

Es gibt eine Vielzahl an radiologischen Untersuchungen, bei denen einem Patienten ein Kontrastmittel appliziert und mittels Bildgebungsverfahren die dynamische Verteilung des Kontrastmittels im Körper verfolgt wird. Als ein Beispiel sei die Detektion und Differentialdiagnose fokaler Leberläsionen mittels dynamischer kontrastverstärkender Magnetresonanztomographie genannt.

Primovist^{®} kann zur Detektion von Tumoren in der Leber eingesetzt werden. Die Blutversorgung des gesunden Lebergewebes erfolgt in erster Linie über die Pfortader (*Vena portae*), während die Leberarterie (*Arteria hepatica*) die meisten Primärtumoren versorgt. Nach intravenöser Bolusinjektion eines Kontrastmittels lässt sich dementsprechend eine Zeitverzögerung zwischen der Signalanhebung des gesunden Leberparenchyms und des Tumors beobachten.

Neben malignen Tumoren findet man in der Leber häufig gutartige Läsionen wie Zysten, Hämangiome und fokal noduläre Hyperplasien (FNH). Für eine sachgerechte Therapieplanung müssen diese von den malignen Tumoren differenziert werden. Primovist^{®} kann zur Erkennung gutartiger und bösartiger fokaler Leberläsionen eingesetzt werden. Es liefert mittels T1-gewichteter MRT Informationen über den Charakter dieser Läsionen. Bei der Differenzierung nutzt man die unterschiedliche Blutversorgung von Leber und Tumor und den zeitlichen Verlauf der Kontrastverstärkung.

Die mittels Primovist^{®} erzielte Kontrastverstärkung kann man in mindestens zwei Phasen unterteilen: in eine dynamische Phase (umfassend die so genannte arterielle Phase, portalvenöse Phase und Spätphase) und die hepatobiliäre Phase, in der bereits eine signifikante Aufnahme von Primovist^{®} in die Hepatozyten stattgefunden hat.

Bei der durch Primovist^{®} erzielten Kontrastverstärkung während der Anflutungsphase beobachtet man typische Perfusionsmuster, die Informationen für die Charakterisierung der Läsionen liefern. Die Darstellung der Vaskularisierung hilft, die Läsionstypen zu charakterisieren und den räumlichen Zusammenhang zwischen Tumor und Blutgefäßen zu bestimmen.

Bei T1-gewichteten MRT-Aufnahmen führt Primovist^{®} 10-20 Minuten nach der Injektion (in der hepatobiliären Phase) zu einer deutlichen Signalverstärkung im gesunden Leberparenchym, während Läsionen, die keine oder nur wenige Hepatozyten enthalten, z.B. Metastasen oder mittelgradig bis schlecht differenzierte hepatozelluläre Karzinome (HCCs), als dunklere Bereiche auftreten.

Die zeitliche Verfolgung der Verteilung des Kontrastmittels über die dynamische Phase und die hepatobiliäre Phase bietet also eine gute Möglichkeit der Detektion und Differentialdiagnose fokaler Leberläsionen; allerdings zieht sich die Untersuchung über eine vergleichsweise lange Zeitspanne hin. Über diese Zeitspanne sollten Bewegungen des Patienten weitgehend vermieden werden, um Bewegungsartefakte in den MRT-Aufnahme zu minimieren. Die lang andauernde Bewegungseinschränkung kann für einen Patienten unangenehm sein.

US2014/0376794A1 offenbart ein Verfahren zur Beschleunigung der Erfassung von Mehrkanal- und Mehrscandaten in einem klinischen MRT-Protokoll, indem Korrelationsfunktionen aus zuvor erfassten oder rekonstruierten Bildern mit gleichem oder unterschiedlichem Kontrast und Auflösung geschätzt werden. Unter Verwendung eines MRT-Scanners sammelt das Verfahren eine Vielzahl früherer MRT-Bildabtastungsdatensätze, erhält aktuelle MRT-Abtastungsdaten und rekonstruiert den aktuellen MRT-Abtastungsdatensatz unter Verwendung eines Aggregats aus der Vielzahl früherer MRT-Bilddatensätze.

Die vorliegende Erfindung stellt Mittel bereit, die es erlauben, eine oder mehrere radiologische Aufnahmen synthetisch zu erzeugen. Dabei werden die synthetisch erzeugten radiologischen Aufnahmen mittels eines Modells des maschinellen Lernens auf Basis einer zeitlichen Sequenz von gemessenen radiologischen Aufnahmen, die eine zeitlich variierende Kontrastmittelverstärkung zeigen, vorhergesagt. Dies hat den Vorteil, dass eine radiologische Untersuchung dadurch beschleunigt werden kann, dass nicht alle radiologischen Aufnahmen, die für eine Diagnose wichtig sind, gemessen werden müssen; eine oder mehrere radiologische Aufnahmen können auf Basis von gemessenen radiologischen Aufnahmen vorhergesagt (berechnet) werden; die Untersuchungszeit kann also verkürzt werden. Zudem erfolgt die Vorhersage von radiologischen Aufnahmen im Frequenzraum (und nicht wie üblich im Ortsraum). Dadurch ist es möglich, in radiologischen Repräsentationen eines Untersuchungsbereichs Kontrastinformationen von Detailinformationen zu separieren, das Training und die Vorhersage auf die Kontrastinformationen zu beschränken, und die Detailinformationen dann nach der Vorhersage wieder zuzuführen. Dieses Vorgehen reduziert beispielsweise den Rechenaufwand. Ferner bedeutet das Arbeiten im Frequenzraum eine höhere Toleranz gegenüber mangelhafter Bildregistrierung.

Ein erster Gegenstand der vorliegenden Erfindung ist ein computer-implementiertes Verfahren nach Anspruch 1 umfassend die Schritte
- Empfangen einer Mehrzahl von ersten Repräsentationen eines Untersuchungsbereichs eines Untersuchungsobjekts im Frequenzraum, wobei zumindest ein Teil der ersten Repräsentationen den Untersuchungsbereich während einer ersten Zeitspanne nach einer Applikation eines Kontrastmittels repräsentiert,
- Zuführen der Mehrzahl von ersten Repräsentationen einem Vorhersagemodell, wobei das Vorhersagemodell anhand von ersten Referenz-Repräsentationen und von zweiten Referenz-Repräsentationen des Untersuchungsbereichs einer Vielzahl von Untersuchungsobjekten trainiert worden ist, aus den ersten Referenz- Repräsentationen, von denen zumindest ein Teil den Untersuchungsbereich während einer ersten Zeitspanne nach einer Applikation eines Kontrastmittels im Frequenzraum repräsentiert, eine oder mehrere zweite Referenz-Repräsentationen zu erzeugen, die den Untersuchungsbereich während einer zweiten Zeitspanne im Frequenzraum repräsentieren, wobei die zweite Zeitspanne zeitlich nach der ersten Zeitspanne liegt,
- Empfangen von einer oder von mehreren vorhergesagten Repräsentationen des Untersuchungsbereichs im Frequenzraum von dem Vorhersagemodell, wobei die eine oder die mehreren vorhergesagten Repräsentationen den Untersuchungsbereich während einer zweiten Zeitspanne repräsentieren, wobei die zweite Zeitspanne zeitlich nach der ersten Zeitspanne liegt,
- Transformieren der einen oder der mehreren vorhergesagten Repräsentationen in eine oder mehrere Repräsentationen des Untersuchungsbereichs im Ortsraum,
- Ausgeben und/oder Speichern der einen oder der mehreren Repräsentationen des Untersuchungsbereichs im Ortsraum.

Ein weiterer Gegenstand der vorliegenden Erfindung ist ein System nach Anspruch 9 umfassend
- eine Empfangseinheit,
- eine Steuer- und Recheneinheit und
- eine Ausgabeeinheit,
wobei die Steuer- und Recheneinheit konfiguriert ist,
- die Empfangseinheit zu veranlassen, eine Mehrzahl von ersten Repräsentationen eines Untersuchungsbereichs eines Untersuchungsobjekts im Frequenzraum zu empfangen, wobei zumindest ein Teil der ersten Repräsentationen den Untersuchungsbereich während einer ersten Zeitspanne nach einer Applikation eines Kontrastmittels repräsentiert,
- die Mehrzahl von ersten Repräsentationen einem Vorhersagemodell zuzuführen, wobei das Vorhersagemodell anhand von ersten Referenz-Repräsentationen und zweiten Referenz-Repräsentationen des Untersuchungsbereichs einer Vielzahl von Untersuchungsobjekten trainiert worden ist, aus den ersten Referenz- Repräsentationen, von denen zumindest ein Teil den Untersuchungsbereich während einer ersten Zeitspanne nach einer Applikation eines Kontrastmittels im Frequenzraum repräsentiert, eine oder mehrere zweite Referenz-Repräsentationen zu erzeugen, die den Untersuchungsbereich während einer zweiten Zeitspanne im Frequenzraum repräsentieren, wobei die zweite Zeitspanne zeitlich nach der ersten Zeitspanne liegt,
- von dem Vorhersagemodell eine oder mehrere vorhergesagte Repräsentationen des Untersuchungsbereichs im Frequenzraum zu empfangen, wobei die eine oder die mehreren vorhergesagten Repräsentationen den Untersuchungsbereich während einer zweiten Zeitspanne repräsentieren, wobei die zweite Zeitspanne zeitlich nach der ersten Zeitspanne liegt,
- die eine oder die mehreren vorhergesagten Repräsentationen in eine oder mehrere Repräsentationen des Untersuchungsbereichs im Ortsraum zu transformieren,
- die Ausgabeeinheit zu veranlassen, die eine oder die mehreren Repräsentationen des Untersuchungsbereichs im Ortsraum auszugeben und/oder zu speichern.

Ein weiterer Gegenstand der vorliegenden Erfindung ist ein Computerprogrammprodukt nach Anspruch 10 umfassend ein Computerprogramm, das in einen Arbeitsspeicher eines Computersystems geladen werden kann und dort das Computersystem dazu veranlasst, folgende Schritte ausführen:
- Empfangen einer Mehrzahl von ersten Repräsentationen eines Untersuchungsbereichs eines Untersuchungsobjekts im Frequenzraum, wobei zumindest ein Teil der ersten Repräsentationen den Untersuchungsbereich während einer ersten Zeitspanne nach einer Applikation eines Kontrastmittels repräsentiert,
- Zuführen der Mehrzahl von ersten Repräsentationen einem Vorhersagemodell, wobei das Vorhersagemodell anhand von ersten Referenz-Repräsentationen und zweiten Referenz-Repräsentationen des Untersuchungsbereichs einer Vielzahl von Untersuchungsobjekten trainiert worden ist, aus den ersten Referenz- Repräsentationen, von denen zumindest ein Teil den Untersuchungsbereich während einer ersten Zeitspanne nach einer Applikation eines Kontrastmittels im Frequenzraum repräsentiert, eine oder mehrere zweite Referenz-Repräsentationen zu erzeugen, die den Untersuchungsbereich während einer zweiten Zeitspanne im Frequenzraum repräsentieren, wobei die zweite Zeitspanne zeitlich nach der ersten Zeitspanne liegt,
- Empfangen von einer oder von mehreren vorhergesagten Repräsentationen des Untersuchungsbereichs im Frequenzraum von dem Vorhersagemodell, wobei die eine oder die mehreren vorhergesagten Repräsentationen den Untersuchungsbereich während einer zweiten Zeitspanne repräsentieren, wobei die zweite Zeitspanne zeitlich nach der ersten Zeitspanne liegt,
- Transformieren der einen oder der mehreren vorhergesagten Repräsentationen in eine oder mehrere Repräsentationen des Untersuchungsbereichs im Ortsraum,
- Ausgeben und/oder Speichern der einen oder der mehreren Repräsentationen des Untersuchungsbereichs im Ortsraum.

Ein weiterer Gegenstand der vorliegenden Erfindung ist eine Verwendung eines Kontrastmittels in einem Verfahren nach Anspruch 11 zur Vorhersage mindestens einer radiologischen Aufnahme, wobei das Verfahren die folgenden Schritte umfasst:
- Erzeugen einer Mehrzahl von ersten Repräsentationen eines Untersuchungsbereichs eines Untersuchungsobjekts im Frequenzraum, wobei zumindest ein Teil der ersten Repräsentationen den Untersuchungsbereich während einer ersten Zeitspanne nach einer Applikation des Kontrastmittels repräsentiert,
- Zuführen der Mehrzahl von ersten Repräsentationen einem Vorhersagemodell, wobei das Vorhersagemodell anhand von ersten Referenz-Repräsentationen und zweiten Referenz-Repräsentationen des Untersuchungsbereichs einer Vielzahl von Untersuchungsobjekten trainiert worden ist, aus den ersten Referenz-Repräsentationen, von denen zumindest ein Teil den Untersuchungsbereich während einer ersten Zeitspanne nach einer Applikation eines Kontrastmittels im Frequenzraum repräsentiert, eine oder mehrere zweite Referenz-Repräsentationen zu erzeugen, die den Untersuchungsbereich während einer zweiten Zeitspanne im Frequenzraum repräsentieren, wobei die zweite Zeitspanne zeitlich nach der ersten Zeitspanne liegt,
- Empfangen von einer oder von mehreren vorhergesagten Repräsentationen des Untersuchungsbereichs im Frequenzraum von dem Vorhersagemodell, wobei die eine oder die mehreren vorhergesagten Repräsentationen den Untersuchungsbereich während einer zweiten Zeitspanne repräsentieren, wobei die zweite Zeitspanne zeitlich nach der ersten Zeitspanne liegt,
- Transformieren der einen oder der mehreren vorhergesagten Repräsentationen in eine oder mehrere Repräsentationen des Untersuchungsbereichs im Ortsraum,
- Ausgeben und/oder Speichern der einen oder der mehreren Repräsentationen des Untersuchungsbereichs im Ortsraum.

Die Erfindung wird nachstehend näher erläutert, ohne zwischen den Erfindungsgegenständen (Verfahren, System, Computerprogrammprodukt, Verwendung) zu unterscheiden. Die nachfolgenden Erläuterungen sollen vielmehr für alle Erfindungsgegenstände in analoger Weise gelten, unabhängig davon, in welchem Kontext (Verfahren, System, Computerprogrammprodukt, Verwendung) sie erfolgen.

Wenn in der vorliegenden Beschreibung oder in den Patentansprüchen Schritte in einer Reihenfolge genannt sind, bedeutet dies nicht zwingend, dass die Erfindung auf die genannte Reihenfolge beschränkt ist. Vielmehr ist denkbar, dass die Schritte auch in einer anderen Reihenfolge oder auch parallel zueinander ausgeführt werden; es sei denn, ein Schritt baut auf einem anderen Schritt auf, was zwingend erforderlich macht, dass der aufbauende Schritt nachfolgend ausgeführt wird (was im Einzelfall aber deutlich wird). Die genannten Reihenfolgen stellen damit bevorzugte Ausführungsformen der Erfindung dar.

Die vorliegende Erfindung erlaubt die Verkürzung der Zeitspanne der radiologischen Untersuchung eines Untersuchungsobjekts.

Das "Untersuchungsobjekt" ist üblicherweise ein Lebewesen, vorzugsweise ein Säugetier, ganz besonders bevorzugt ein Mensch.

Der "Untersuchungsbereich" ist üblicherweise ein Teil des Untersuchungsobjekts, zum Beispiel ein Organ oder ein Teil eines Organs. Der "Untersuchungsbereich", auch Aufnahmevolumen (engl.: *field of view*, FOV) genannt, stellt insbesondere ein Volumen dar, welches in radiologischen Aufnahmen abgebildet wird. Der Untersuchungsbereich wird typischerweise durch einen Radiologen, beispielsweise auf einer Übersichtsaufnahme (engl.: *localizer*) festgelegt. Selbstverständlich kann der Untersuchungsbereich alternativ oder zusätzlich auch automatisch, beispielsweise auf Grundlage eines ausgewählten Protokolls, festgelegt werden.

Unter dem Begriff "radiologische Untersuchung" werden alle bildgebenden Verfahren verstanden, die einen Einblick in ein Untersuchungsobjekt mit Hilfe von elektromagnetischen Strahlen, Teilchenstrahlung oder mechanischen Wellen zu diagnostischen, therapeutischen und/oder wissenschaftlichen Zwecken erlauben. Der Begriff "Radiologie" im Sinne der vorliegenden Erfindung umfasst insbesondere die folgenden Untersuchungsmethoden: Computertomografie, Magnetresonanztomografie, Sonografie, Positron-Emissions-Tomografie, Echokardiografie, Szintigrafie.

In einer bevorzugten Ausführungsform der vorliegenden Erfindung handelt es sich bei der radiologischen Untersuchung um eine magnetresonanztomografische Untersuchung.

Die Magnetresonanztomografie, abgekürzt MRT oder MR (engl. MRI: *Magnetic Resonance Imaging*), ist ein bildgebendes Verfahren, das vor allem in der medizinischen Diagnostik zur Darstellung von Struktur und Funktion der Gewebe und Organe im menschlichen oder tierischen Körper eingesetzt wird.

Bei der MR-Bildgebung werden die magnetischen Momente von Protonen in einem Untersuchungsobjekt in einem Grundmagnetfeld ausgerichtet, so dass sich eine makroskopische Magnetisierung entlang einer Längsrichtung einstellt. Diese wird anschließend durch das Einstrahlen von Hochfrequenz(HF)-Pulsen aus der Ruhelage ausgelenkt (Anregung). Die Rückkehr der angeregten Zustände in die Ruhelage (Relaxation) bzw. die Magnetisierungsdynamik wird anschließend mittels einer oder mehrerer HF-Empfangsspulen als Relaxationssignale detektiert.

Zur Ortskodierung werden dem Grundmagnetfeld schnell geschaltete magnetische Gradientenfelder überlagert. Die erfassten Relaxationssignale bzw. die detektierten und ortsaufgelösten MR-Daten liegen zunächst als Rohdaten in einem Frequenzraum vor, und können beispielsweise durch anschließende inverse Fourier-Transformation in den Ortsraum (Bildraum) transformiert werden.

Bei der nativen MRT werden die Gewebs-Kontraste durch die unterschiedlichen Relaxationszeiten (T1 und T2) und die Protonendichte erzeugt. Dabei beschreibt die T1-Relaxation den Übergang der Längsmagnetisierung (longitudinale Magnetisierung) in ihren Gleichgewichtszustand, wobei T1 diejenige Zeit ist, die benötigt wird, um 63,21% der Gleichgewichtsmagnetisierung vor der Resonanzanregung zu erreichen. Sie wird auch longitudinale Relaxationszeit oder Spin-Gitter-Relaxationszeit genannt. Die T2-Relaxation beschreibt in analoger Weise den Übergang der Transversalmagnetisierung in ihren Gleichgewichtszustand.

Bei radiologischen Untersuchungen werden häufig Kontrastmittel zur Kontrastverstärkung eingesetzt.

"Kontrastmittel" sind Substanzen oder Gemische von Substanzen, die die Darstellung von Strukturen und Funktionen des Körpers bei bildgebenden Verfahren wie Röntgendiagnostik, Magnetresonanztomografie und Sonografie verbessern.

Beispiele für Kontrastmittel sind in der Literatur zu finden (siehe z.B. A. S. L. Jascinth et al.: Contrast Agents in computed tomography: A Review, Journal of Applied Dental and Medical Sciences, 2016, Vol. 2, Issue 2, 143 - 149; H. Lusic et al.: X-ray-Computed Tomography Contrast Agents, Chem. Rev. 2013, 113, 3, 1641-1666; https://www.radiology.wisc.edu/wp-content/uploads/2017/10/contrast-agents-tutorial.pdf, M. R. Nough et al.: Radiographie and magnetic resonances contrast agents: Essentials and tips for safe practices, World J Radiol. 2017 Sep 28; 9(9): 339-349; L. C. Abonyi et al.: Intravascular Contrast Media in Radiography: Historical Development & Review of Risk Factors for Adverse Reactions, South American Journal of Clinical Research, 2016, Vol. 3, Issue 1, 1-10; ACR Manual on Contrast Media, 2020, ISBN: 978-1-55903-012-0; A. Ignee et al.: Ultrasound contrast agents, Endosc Ultrasound. 2016 Nov-Dec; 5(6): 355-362).

MR-Kontrastmittel entfalten ihre Wirkung, indem sie die Relaxationszeiten der Strukturen, die Kontrastmittel aufnehmen, verändern. Es lassen sich zwei Stoffgruppen unterscheiden: para- und superparamagnetische Stoffe. Beide Stoffgruppen besitzen ungepaarte Elektronen, die ein magnetisches Feld um die einzelnen Atome bzw. Moleküle induzieren. Superparamagnetische führen zu einer überwiegenden T2-Verkürzung, während paramagnetische Kontrastmittel im Wesentlichen zu einer T1-Verkürzung führen. Die Wirkung dieser Kontrastmittel ist indirekt, da das Kontrastmittel selbst kein Signal abgibt, sondern nur die Signalintensität in seiner Umgebung beeinflusst. Ein Beispiel für ein superparamagnetisches Kontrastmittel sind Eisenoxidnanopartikel (SPIO, engl.: *superparamagnetic iron oxide*). Beispiele für paramagnetische Kontrastmittel sind Gadolinium-Chelate wie Gadopentetat-Dimeglumin (Handelsname: Magnevist^{®} u.a.), Gadotersäure (Dotarem^{®}, Dotagita^{®}, Cyclolux^{®}), Gadodiamid (Omniscan^{®}), Gadoteridol (ProHance^{®}) und Gadobutrol (Gadovist^{®}).

Mit Hilfe der vorliegenden Erfindung kann eine oder es können mehrere synthetische radiologische Aufnahmen eines Untersuchungsbereichs vorhergesagt werden. Die Vorhersage erfolgt mit Hilfe eines Vorhersagemodells.

Das Vorhersagemodell ist ein computergestütztes Modell, das konfiguriert ist, auf Basis einer Mehrzahl von ersten Repräsentationen eines Untersuchungsbereichs eines Untersuchungsobjekts im Frequenzraum, eine oder mehrere zweite Repräsentationen des Untersuchungsbereichs des Untersuchungsobjekts im Frequenzraum vorherzusagen. Dabei repräsentiert zumindest ein Teil der Mehrzahl von ersten Repräsentationen den Untersuchungsbereich während einer ersten Zeitspanne nach der Applikation eines Kontrastmittels. Die mindestens eine zweite Repräsentation repräsentiert den Untersuchungsbereich während einer zweiten Zeitspanne.

Der Begriff "Mehrzahl" bedeutet eine Anzahl von mindestens zwei. Üblicherweise ist die Mehrzahl von ersten Repräsentationen, die zur Vorhersage verwendet werden, nicht größer als zehn.

Die zweite Zeitspanne liegt zeitlich nach der ersten Zeitspanne.

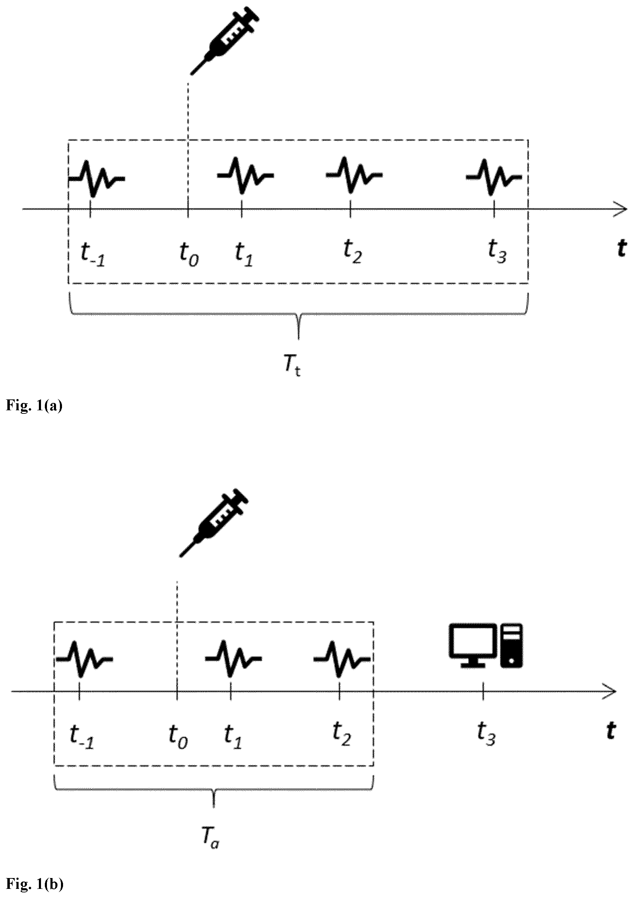

Fig. 1(a) und Fig. 1(b) dienen der Verdeutlichung. In Fig. 1(a) und Fig. 1(b) sind jeweils Zeitstrahlen dargestellt. Auf den Zeitstrahlen sind definierte Zeitpunkte markiert. Der Zeitpunkt *t*₀ kennzeichnet den Zeitpunkt, zu dem einem Untersuchungsobjekt ein Kontrastmittel appliziert wird. Der gestrichelte Rahmen zeigt die Zeitspanne, in der das Untersuchungsobjekt einer radiologischen Untersuchung unterzogen wird, also beispielsweise die Zeit, die das Untersuchungsobjekt in einem Magnetresonanztomografen oder einem Computertomografen verbringt.

Fig. 1(a) illustriert schematisch einen typischen Verlauf einer radiologischen Untersuchung. Das Untersuchungsobjekt wird in einen Tomografen eingebracht. Zum Zeitpunkt *t*₋₁ befindet sich das Untersuchungsobjekt im Tomografen. Zum Zeitpunkt *t*₋₁ wird eine erste radiologische Aufnahme erzeugt, d.h. es wird eine Repräsentation eines Untersuchungsbereichs des Unterobjekts erzeugt. Zu diesem Zeitpunkt (*t*₋₁) ist dem Untersuchungsobjekt noch kein Kontrastmittel verabreicht worden, d.h. es handelt sich um eine kontrastmittelfreie (native) Repräsentation. Zum Zeitpunkt *t*₀ wird dem im Tomografen befindlichen Untersuchungsobjekt ein Kontrastmittel appliziert. Zu den Zeitpunkten *t*₁, *t*₂ und *t*₃ werden weitere Repräsentationen des Untersuchungsobjekts erzeugt. Anschließend verlässt das Untersuchungsobjekt den Tomografen. Das Untersuchungsobjekt befand sich über eine vergleichsweise lange Zeitspanne *T*ₜ im Tomografen. Während dieser Zeit wurden vier Repräsentationen des Untersuchungsbereichs messtechnisch erzeugt.

Fig. 1(b) illustriert schematisch einen Verlauf einer radiologischen Untersuchung gemäß der vorliegenden Erfindung. Das Untersuchungsobjekt wird in einen Tomografen eingebracht. Zum Zeitpunkt *t*₋₁ befindet sich das Untersuchungsobjekt im Tomografen. Zum Zeitpunkt *t*₋₁ wird eine erste Repräsentation eines Untersuchungsbereichs des Unterobjekts erzeugt. Zu diesem Zeitpunkt (*t*₋₁) ist dem Untersuchungsobjekt noch kein Kontrastmittel verabreicht worden, d.h. es handelt sich um eine kontrastmittelfreie (native) Repräsentation. Zum Zeitpunkt *t*₀ wird dem im Tomografen befindlichen Untersuchungsobjekt ein Kontrastmittel appliziert. Zu den Zeitpunkten *t*₁ und *t*₂ werden weitere Repräsentationen des Untersuchungsobjekts erzeugt. Anschließend verlässt das Untersuchungsobjekt den Tomografen. Die Repräsentation, die im Fall von Fig. 1(a) zum Zeitpunkt *t*₃ messtechnisch erzeugt worden ist, wird im Fall des in Fig. 1(b) gezeigten Verlaufs vorhergesagt (berechnet). Das Untersuchungsobjekt befand sich über eine Zeitspanne *T*ₐ im Tomografen, wobei diese Zeitspanne *T*ₐ kürzer ist als die Zeitspanne *T*ₜ in Fig. 1(a). Die radiologische Untersuchung dauert im Fall von Fig. 1(b) also nicht so lange wie im Fall von Fig. 1(a), sie ist für das Untersuchungsobjekt damit angenehmer; es werden aber in beiden Fällen Repräsentationen des Untersuchungsbereichs erzeugt, die den Untersuchungsbereich zu den Zeitpunkten *t*₋₁, *t*₁*, t*₂ und *t*₃ repräsentieren. Bei den Repräsentationen, die zu den Zeitpunkten *t*₋₁, *t*₁ und *t*₂ messtechnisch erzeugt wurden, handelt es sich um erste Repräsentationen eines Untersuchungsbereichs eines Untersuchungsobjekts im Sinne der vorliegenden Erfindung, bei denen zumindest ein Teil einen Untersuchungsbereich während einer ersten Zeitspanne nach einer Applikation eines Kontrastmittels repräsentiert, nämlich die Repräsentationen zu den Zeitpunkten *t*₁*, t*₂ und *t*₃; die Repräsentation zum Zeitpunkt *t*₋₁ repräsentiert den Untersuchungsbereich in einer Zeitspanne vor Applikation des Kontrastmittels. Die Repräsentation zum Zeitpunkt *t*₃ wird von dem erfindungsgemäßen Vorhersagemodell auf Basis der Repräsentationen *t*₋₁, *t*₁ und *t*₂ vorhergesagt. Sie repräsentiert den Untersuchungsbereich während einer zweiten Zeitspanne, wobei im Fall von Fig. 1(b) die zweite Zeitspanne zeitlich auf die erste Zeitspanne folgt.

In einer bevorzugten Ausführungsform der vorliegenden Erfindung beginnt die erste Zeitspanne vor der Applikation des Kontrastmittels oder mit der Applikation des Kontrastmittels. Vorteilhaft ist es, wenn eine oder mehrere Repräsentationen des Untersuchungsbereichs erzeugt werden, die den Untersuchungsbereich ohne Kontrastmittel zeigen (native Aufnahmen), da ein Radiologe aus solchen Aufnahmen bereits wichtige Informationen zum Gesundheitszustand des Untersuchungsobjekts gewinnen kann. Beispielsweise kann ein Radiologe in nativen MRT-Aufnahmen Blutungen erkennen.

Damit das erfindungsgemäße Vorhersagemodell die hier beschriebenen Vorhersagen machen kann, muss es vorab entsprechend konfiguriert werden.

Dabei bedeutet der Begriff "Vorhersage", dass mindestens eine Repräsentation eines Untersuchungsbereichs, die den Untersuchungsbereich während einer zweiten Zeitspanne im Frequenzraum repräsentiert, unter Verwendung einer Mehrzahl von ersten Repräsentationen des Untersuchungsbereichs im Frequenzraum berechnet wird, wobei zumindest ein Teil der Mehrzahl der ersten Repräsentationen den Untersuchungsbereich während einer ersten Zeitspanne nach einer Applikation eines Kontrastmittels repräsentiert.

Das Vorhersagemodell wird vorzugsweise mit Hilfe eines selbstlernenden Algorithmus in einem überwachten maschinellen Lernen erstellt (konfiguriert, trainiert). Zum Lernen werden Trainingsdaten verwendet. Diese Trainingsdaten umfassen, für jedes Untersuchungsobjekt einer Vielzahl an Untersuchungsobjekten, eine Mehrzahl von Repräsentationen eines Untersuchungsbereichs. Der Untersuchungsbereich ist für alle Untersuchungsobjekte üblicherweise der gleiche (z.B. ein Teil eines menschlichen Körpers oder ein Organ oder ein Teil eines Organs). Die Repräsentationen des Trainingsdatensatzes werden in dieser Beschreibung auch als Referenz-Repräsentationen bezeichnet. Der Begriff "Vielzahl" bedeutet vorzugsweise mehr als 10, noch mehr bevorzugt mehr als 100.

Für jedes Untersuchungsobjekt umfassen die Trainingsdaten i) eine Mehrzahl an ersten Referenz-Repräsentationen des Untersuchungsbereichs im Frequenzraum, von denen zumindest ein Teil den Untersuchungsbereich während einer ersten Zeitspanne nach einer Applikation eines Kontrastmittels repräsentiert, und ii) eine oder mehrere zweite Referenz-Repräsentationen des Untersuchungsbereichs im Frequenzraum, die den Untersuchungsbereich während einer zweiten Zeitspanne repräsentieren.

Das Vorhersagemodell wird trainiert, für jedes Untersuchungsobjekt die eine oder die mehreren zweiten Referenz-Repräsentationen aus der Mehrzahl von ersten Referenz-Repräsentationen vorherzusagen (zu berechnen).

Der selbstlernende Algorithmus erzeugt beim maschinellen Lernen ein statistisches Modell, das auf den Trainingsdaten beruht. Das heißt, es werden nicht einfach die Beispiele auswendig gelernt, sondern der Algorithmus "erkennt" Muster und Gesetzmäßigkeiten in den Trainingsdaten. So kann das Vorhersagemodell auch unbekannte Daten beurteilen. Validierungsdaten können verwendet werden, um die Güte der Beurteilung unbekannter Daten zu prüfen.

Das Trainieren des Vorhersagemodells kann mittels überwachten Lernens (engl.: *supervised learning*) erfolgen, d.h. dem Algorithmus werden nacheinander jeweils Paare von Datensätzen (erste und zweite Repräsentationen) präsentiert. Der Algorithmus lernt dann eine Beziehung zwischen den ersten Repräsentationen und den zweiten Repräsentationen.

Selbstlernende Systeme, die mittels überwachten Lernens trainiert werden, sind vielfältig im Stand der Technik beschrieben (siehe z.B. C. Perez: Machine Learning Techniques: Supervised Learning and Classification, Amazon Digital Services LLC - Kdp Print Us, 2019, ISBN 1096996545, 9781096996545).

Vorzugsweise ist das Vorhersagemodell ein künstliches neuronales Netz oder umfasst ein solches.

Ein künstliches neuronales Netzwerk umfasst mindestens drei Schichten von Verarbeitungselementen: eine erste Schicht mit Eingangsneuronen (Knoten), eine N-te Schicht mit mindestens einem Ausgangsneuron (Knoten) und N-2 innere Schichten, wobei N eine natürliche Zahl und größer als 2 ist.

Die Eingangsneuronen dienen zum Empfangen von ersten Repräsentationen. Die Ausgangsneuronen dienen dazu, für eine Mehrzahl an ersten Repräsentationen eine oder mehrere zweite Repräsentationen auszugeben.

Die Verarbeitungselemente der Schichten zwischen den Eingangsneuronen und den Ausgangsneuronen sind in einem vorbestimmten Muster mit vorbestimmten Verbindungsgewichten miteinander verbunden.

Vorzugsweise handelt es sich bei dem künstlichen neuronalen Netz um ein so genanntes Convolutional Neural Network (kurz: CNN).

Ein Convolutional Neural Network ist in der Lage, Eingabedaten in Form einer Matrix zu verarbeiten. Ein CNN besteht im Wesentlichen aus Filtern (Convolutional Layer) und Aggregations-Schichten (Pooling Layer), die sich abwechselnd wiederholen, und am Ende aus einer Schicht oder mehreren Schichten von "normalen" vollständig verbundenen Neuronen (Dense / Fully Connected Layer).

Das Trainieren des neuronalen Netzes kann beispielsweise mittels eines Backpropagation-Verfahrens durchgeführt werden. Dabei wird für das Netz eine möglichst zuverlässige Abbildung von gegebenen Eingabedaten auf gegebene Ausgabedaten angestrebt. Die Qualität der Abbildung wird durch eine Fehlerfunktion (engl.: *loss function*) beschrieben. Das Ziel ist die Minimierung der Fehlerfunktion. Das Einlernen eines künstlichen neuronalen Netzes erfolgt bei dem Backpropagation-Verfahren durch die Änderung der Verbindungsgewichte.

Im trainierten Zustand enthalten die Verbindungsgewichte zwischen den Verarbeitungselementen Informationen bezüglich der Beziehung zwischen ersten Repräsentationen und einer oder mehreren zweiten Repräsentationen, die verwendet werden können, um eine oder mehrere zweite Repräsentationen, die einen Untersuchungsbereich während einer zweiten Zeitspanne zeigen, für eine neue Mehrzahl an ersten Repräsentationen (z.B. von einem neuen Untersuchungsobjekt), von denen zumindest ein Teil den Untersuchungsbereich während einer ersten Zeitspanne nach Applikation eines Kontrastmittels zeigt, vorherzusagen.

Eine Kreuzvalidierungsmethode kann verwendet werden, um die Daten in Trainings- und Validierungsdatensätze aufzuteilen. Der Trainingsdatensatz wird beim Backpropagation-Training der Netzwerkgewichte verwendet. Der Validierungsdatensatz wird verwendet, um zu überprüfen, mit welcher Vorhersagegenauigkeit sich das trainierte Netzwerk auf unbekannte Daten anwenden lässt.

Weitere Details zum Aufsetzen und Trainieren von künstlichen neuronalen Netzen sind dem Stand der Technik zu entnehmen (siehe z.B.: S. Khan et al.: A Guide to Convolutional Neural Networks for Computer Vision, Morgan & Claypool Publishers 2018, ISBN 1681730227, 9781681730226, WO2018/183044A1, WO2018/200493, WO2019/074938A1, WO2019/204406A1, WO2019/241659A1).

Vorzugsweise ist das Vorhersagemodell ein *Generative Adversarial Network* (GAN) (siehe z.B.: http://3dgan.csail.mit.edu/).

Neben den Repräsentationen können zum Trainieren, Validieren und Vorhersagen auch weitere Informationen zum Untersuchungsobjekt, zum Untersuchungsbereich, zu Untersuchungsbedingungen und/oder zu den radiologischen Untersuchungen verwendet werden.

Beispiele für Informationen zum Untersuchungsobjekt sind: Geschlecht, Alter, Gewicht, Größe, Anamnese, Art und Dauer und Menge bereits eingenommener Medikamente, Blutdruck, zentralvenöser Druck, Atemfrequenz, Serum Albumin, Total Bilirubin, Blutzucker, Eisengehalt, Atemkapazität und dergleichen. Diese können z.B. aus einer Datenbank bzw. einer elektronischen Patientenakte ausgelesen werden.

Beispiele für Informationen zum Untersuchungsbereich sind: Vorerkrankungen, Operationen, Teilresektion, Lebertransplantation, Eisenleber, Fettleber und dergleichen.

Wie bereits beschrieben handelt es sich bei den Repräsentationen des Untersuchungsbereichs, die zum Trainieren, Validieren und zur Vorhersage verwendet werden, um Repräsentationen des Untersuchungsbereichs im Frequenzraum (auch als Ortsfrequenzraum oder Fourier-Raum oder Frequenzdomäne oder Fourier-Darstellung bezeichnet).

In der Magnetresonanztomografie fallen die Rohdaten aufgrund des oben beschriebenen Messverfahrens üblicherweise als so genannte k-Raum-Daten an. Bei diesen k-Raum-Daten handelt es sich um eine Darstellung eines Untersuchungsbereichs in einem Frequenzraum; d.h. solche k-Raum-Daten können zum Trainieren, Validieren und zur Vorhersage verwendet werden. Falls Repräsentationen im Ortsraum vorliegen, können solche Repräsentationen im Ortsraum durch Fourier-Transformation in eine Repräsentation im Frequenzraum umgewandelt (transformiert) werden; umgekehrt gilt: Repräsentationen im Frequenzraum können z.B. durch inverse Fourier-Transformation in eine Repräsentation im Ortsraum umgewandelt (transformiert) werden.

Liegt also eine radiologische Aufnahme eines Untersuchungsbereichs in Form eines zweidimensionalen Bildes im Ortsraum vor, so kann diese Repräsentation des Untersuchungsbereichs durch eine 2D-Fourier-Transformation in eine zweidimensionale Repräsentation des Untersuchungsbereichs im Frequenzraum überführt werden.

Ein dreidimensionales Bild (Volumendarstellung) eines Untersuchungsbereichs kann als ein Stapel von zweidimensionalen Bildern behandelt werden. Denkbar ist ferner, dass das dreidimensionale Bild mittels 3D-Fouriertransformation in eine dreidimensionale Repräsentation des Untersuchungsbereichs im Frequenzraum umgewandelt wird.

Es ist auch denkbar, eine andere Transformation als die Fourier-Transformation zu verwenden, um Ortsraum-Repräsentationen in Frequenzraum-Repräsentationen umzuwandeln. Die drei Haupteigenschaften, die eine solche Transformation erfüllen muss, sind:
a) Existenz einer eindeutigen Rücktransformation (eindeutiger Zusammenhang zwischen Ortsraumdarstellung und Frequenzraumdarstellung)
b) Lokalität der Kontrastinformation
c) Robustheit gegenüber mangelhafter Bildregistrierung

Details zur Transformation von einer Darstellung in eine andere sind in einer Vielzahl von Fachbüchern und Publikationen beschrieben (siehe z.B.: W. Burger, M.J. Burge: Digital Image Processing: An Algorithmic Introduction Using Java, Texts in Computer Science, 2. Ausgabe, Springer- Verlag, 2016, ISBN: 9781447166849; W. Birkfellner: Applied Medical Image Processing, Second Edition: A Basic Course, Verlag Taylor & Francis, 2014, ISBN: 9781466555570; R. Bracewell: Fourier Analysis and Imaging, Verlag Springer Science & Business Media, 2004, ISBN: 9780306481871).

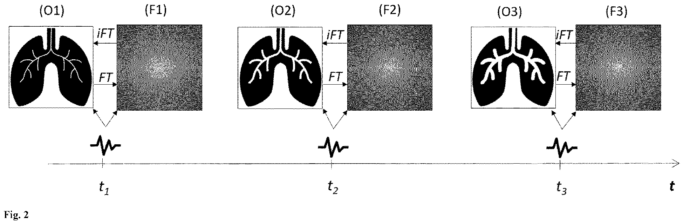

Fig. 2 zeigt beispielhaft und schematisch die Erzeugung von Repräsentationen eines Untersuchungsbereichs im Ortsraum und im Frequenzraum.

In Fig. 2 ist ein Zeitstrahl dargestellt. Zu drei verschiedenen Zeitpunkten *t*₁*, t*₂ und *t*₃ werden messtechnisch Repräsentationen eines Untersuchungsbereichs erzeugt. Bei dem Untersuchungsbereich handelt es sich um die Lunge eines Menschen. Zum Zeitpunkt *t*₁ wird eine erste Repräsentation erzeugt. Dabei kann es sich um eine Repräsentation (O1) des Untersuchungsbereichs (Lunge) im Ortsraum oder um eine Repräsentation (F1) des Untersuchungsbereichs (Lunge) im Frequenzraum handelt. Die Repräsentation (O1) des Untersuchungsbereichs im Ortsraum lässt sich mittels Fourier-Transformation *FT* in eine Repräsentation (F1) des Untersuchungsbereichs im Frequenzraum umwandeln. Die Repräsentation (F1) des Untersuchungsbereichs im Frequenzraum lässt sich mittels inverser Fourier-Transformation *iFT* in eine Repräsentation (O1) des Untersuchungsbereichs im Ortsraum umwandeln. Die beiden Repräsentationen (O1) und (F1) umfassen die gleichen Informationen über den Untersuchungsbereich, nur in einer anderen Darstellung. Zum Zeitpunkt *t*₂ wird eine weitere Repräsentation erzeugt. Dabei kann es sich um eine Repräsentation (O2) des Untersuchungsbereichs (Lunge) im Ortsraum oder um eine Repräsentation (F2) des Untersuchungsbereichs (Lunge) im Frequenzraum handelt. Die Repräsentation (O2) des Untersuchungsbereichs im Ortsraum lässt sich mittels Fourier-Transformation *FT* in eine Repräsentation (F2) des Untersuchungsbereichs im Frequenzraum umwandeln. Die Repräsentation (F2) des Untersuchungsbereichs im Frequenzraum lässt sich mittels inverser Fourier-Transformation *iFT* in eine Repräsentation (O2) des Untersuchungsbereichs im Ortsraum umwandeln. Die beiden Repräsentation (O2) und (F2) umfassen die gleichen Informationen über den Untersuchungsbereich, nur in einer anderen Darstellung. Zum Zeitpunkt *t*₃ wird eine weitere Repräsentation erzeugt. Dabei kann es sich um eine Repräsentation (O3) des Untersuchungsbereichs (Lunge) im Ortsraum oder um eine Repräsentation (F3) des Untersuchungsbereichs (Lunge) im Frequenzraum handelt. Die Repräsentation (O3) des Untersuchungsbereichs im Ortsraum lässt sich mittels Fourier-Transformation *FT* in eine Repräsentation (F3) des Untersuchungsbereichs im Frequenzraum umwandeln. Die Repräsentation (F3) des Untersuchungsbereichs im Frequenzraum lässt sich mittels inverser Fourier-Transformation *iFT* in eine Repräsentation (O3) des Untersuchungsbereichs im Ortsraum umwandeln. Die beiden Repräsentation (O3) und (F3) umfassen die gleichen Informationen über den Untersuchungsbereich, nur in einer anderen Darstellung.

Für den Menschen sind die Repräsentationen (O1), (O2) und (O3) des Untersuchungsbereichs im Ortsraum die geläufigen Repräsentationen; der Mensch kann diese unmittelbar erfassen. Die Repräsentationen (O1), (O2) und (O3) zeigen, wie sich Kontrastmittel dynamisch in den Adern verteilt. Dieselbe Information ist in den Repräsentationen (F1), (F2) und (F3) enthalten, nur für den Menschen schwerer erfassbar.

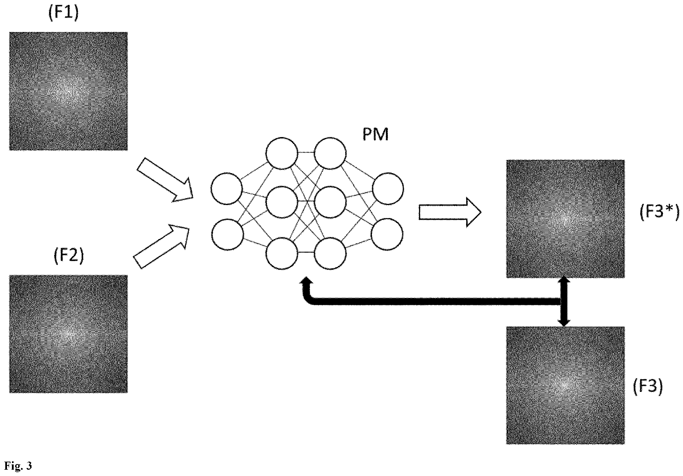

Fig. 3 zeigt schematisch und beispielhaft, wie die in Fig. 2 erzeugten Repräsentationen des Untersuchungsbereichs (F1), (F2) und (F3) im Frequenzraum zum Trainieren eines Vorhersagemodells (PM) genutzt werden können. Die Repräsentationen (F1), (F2) und (F3) bilden einen Satz von Trainingsdaten eines Untersuchungsobjekts. Das Trainieren erfolgt mit einer Vielzahl von Trainingsdatensätzen einer Vielzahl von Untersuchungsobjekten.

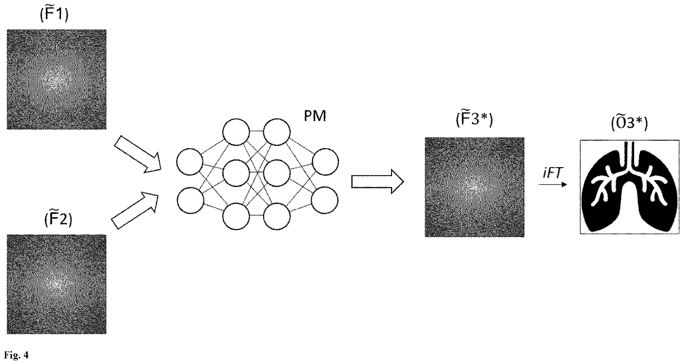

Bei den Repräsentationen (F1) und (F2) handelt es sich um eine Mehrzahl (im vorliegenden Fall um zwei) von ersten Referenz-Repräsentationen des Untersuchungsbereichs im Frequenzraum, von denen zumindest ein Teil den Untersuchungsbereich während einer ersten Zeitspanne nach einer Applikation eines Kontrastmittels repräsentiert. Bei der Repräsentation (F3) handelt es sich um eine zweite Referenz-Repräsentation des Untersuchungsbereichs im Frequenzraum, die den Untersuchungsbereich während einer zweiten Zeitspanne repräsentiert. Das Vorhersagemodell wird in Fig. 3 trainiert, aus den Repräsentationen (F1) und (F2) des Untersuchungsbereichs im Frequenzraum, die Repräsentation (F3) des Untersuchungsbereichs im Frequenzraum vorherzusagen. Die Repräsentationen (F1) und (F2) werden in das Vorhersagemodell (PM) eingegeben und das Vorhersagemodell errechnet aus den Repräsentationen (F1) und (F2) eine Repräsentation (F3*). Das Sternchen (*) signalisiert, dass es sich bei der Repräsentation (F3*) um eine vorhergesagte Repräsentation handelt. Die errechnete Repräsentation (F3*) wird mit der Repräsentation (F3) verglichen. Die Abweichungen können in einem Backpropagation-Verfahren genutzt werden, das Vorhersagemodell zu trainieren, die Abweichungen auf ein definiertes Minimum zu reduzieren. Ist das Vorhersagemodell anhand einer Vielzahl von Trainingsdatensätzen einer Vielzahl an Untersuchungsobjekten trainiert worden, und hat die Vorhersage eine definierte Genauigkeit erreicht, kann das trainierte Vorhersagemodell zur Vorhersage verwendet werden. Dies ist beispielhaft und schematisch in Fig. 4 dargestellt.

Fig. 4 zeigt das in Fig. 3 trainierte Vorhersagemodell (PM). Das Vorhersagemodell wird genutzt, um auf Basis einer Mehrzahl an ersten Repräsentationen des Untersuchungsbereichs im Frequenzraum, von denen zumindest ein Teil den Untersuchungsbereich in einer ersten Zeitspanne nach Applikation eines Kontrastmittels repräsentieren, eine oder mehrere zweite Repräsentationen des Untersuchungsbereichs im Frequenzraum zu erzeugen, wobei die eine oder die mehreren zweiten Repräsentationen den Untersuchungsbereich in einer zweiten Zeitspanne repräsentieren.

Im vorliegenden Beispiel werden zwei erste Repräsentationen (F̃1) und (F̃2) des Untersuchungsbereichs im Frequenzraum in das Vorhersagemodell (PM) eingegeben und das Vorhersagemodell (PM) erzeugt (berechnet) eine zweite Repräsentation (F̃3*). Die Tilde (~) signalisiert, dass es sich bei den Repräsentationen um Repräsentationen von einem neuen Untersuchungsobjekt handelt, von dem üblicherweise keine Repräsentationen vorliegen, die in dem Trainingsverfahren für das Training des Vorhersagemodells verwendet worden sind. Das Sternchen (*) signalisiert, dass es sich bei der Repräsentation (F̃3*) um eine vorhergesagte Repräsentation handelt. Die Repräsentation (F̃3*) des Untersuchungsbereichs im Frequenzraum kann z.B. mittels inverser Fourier-Transformation *iFT* in eine Repräsentation (Õ3*) des Untersuchungsbereichs im Ortsraum transformiert werden.

Die Verwendung von Repräsentationen des Untersuchungsbereichs im Frequenzraum hat Vorteile gegenüber der Verwendung von Repräsentationen des Untersuchungsbereichs im Ortsraum (auch Bildraum oder "*image space*" genannt). Bei der Verwendung von Repräsentationen des Untersuchungsbereichs im Frequenzraum können Kontrastinformationen, auf die es beim Training und bei der Vorhersage ankommt, von Detailinformationen (Feinstrukturen) getrennt werden. Es ist also möglich, sich bei dem Training auf die Informationen zu konzentrieren, die das Vorhersagemodell lernen soll, und sich bei der Vorhersage ebenfalls auf die Informationen zu konzentrieren, die das Vorhersagemodell vorhersagen soll: Kontrastinformationen.

Während Kontrastinformationen in einer Repräsentation eines Untersuchungsbereichs im Ortsraum üblicherweise über die gesamte Repräsentation verteilt sind (jedes Pixel/Voxel trägt Informationen zum Kontrast in sich), sind die Kontrastinformationen in einer Repräsentation eines Untersuchungsbereichs im Frequenzraum im und um das Zentrum des Frequenzraums herum kodiert. Mit anderen Worten: die niedrigen Frequenzen in einer Repräsentation im Frequenzraum sind für den Kontrast verantwortlich, während die hohen Frequenzen Informationen zu Feinstrukturen enthalten.

Es ist damit möglich, die Kontrastinformationen zu separieren, das Training und die Vorhersage auf die Kontrastinformationen zu beschränken und Informationen zu den Feinstrukturen nach dem Training / nach der Vorhersage wieder zuzuführen.

In einer bevorzugten Ausführungsform umfasst das erfindungsgemäße Verfahren die folgenden Schritte:
- Empfangen einer Mehrzahl von ersten Repräsentationen eines Untersuchungsbereichs eines Untersuchungsobjekts im Frequenzraum, wobei zumindest ein Teil der ersten Repräsentationen den Untersuchungsbereich während einer ersten Zeitspanne nach einer Applikation eines Kontrastmittels repräsentiert,
- Spezifizieren eines Bereichs in den ersten Repräsentationen, wobei der spezifizierte Bereich das Zentrum des Frequenzraums umfasst,
- Reduzieren der ersten Repräsentationen auf den spezifizierten Bereich, wobei eine Mehrzahl an reduzierten ersten Repräsentationen erhalten werden,
- Zuführen der Mehrzahl an reduzierten ersten Repräsentationen einem Vorhersagemodell,
- Empfangen von einer oder von mehreren zweiten Repräsentationen des Untersuchungsbereichs im Frequenzraum von dem Vorhersagemodell, wobei die eine oder die mehreren zweiten Repräsentationen den Untersuchungsbereich während einer zweiten Zeitspanne repräsentieren,
- Ergänzen der einen oder der mehreren zweiten Repräsentationen durch einen oder mehrere Bereiche der empfangenen ersten Repräsentationen, die außerhalb des spezifizierten Bereichs liegen, wobei eine oder mehrere ergänzte zweite Repräsentationen erhalten werden,
- Transformieren der einen oder der mehreren ergänzten zweiten Repräsentationen in eine oder mehrere Repräsentationen des Untersuchungsbereichs im Ortsraum,
- Ausgeben und/oder Speichern der einen oder der mehreren Repräsentationen des Untersuchungsbereichs im Ortsraum.

Das Spezifizieren des Bereichs in den ersten Repräsentationen kann beispielsweise dadurch erfolgen, dass ein Nutzer des erfindungsgemäßen Computersystems einen oder mehrere Parameter in das erfindungsgemäße Computersystem eingibt und/oder aus einer Liste auswählt, die die Form und/oder Größe des Bereichs definieren. Denkbar ist aber auch, dass das Spezifizieren automatisch beispielsweise durch das erfindungsgemäße Computersystem erfolgt, das entsprechend konfiguriert wurde, einen vordefinierten Bereich in den Repräsentationen des Untersuchungsbereichs auszuwählen.

Der spezifizierte Bereich ist üblicherweise kleiner als der von den ersten Repräsentationen ausgefüllte Frequenzraum; umfasst aber in jedem Fall das Zentrum des Frequenzraums.

Ein Bereich des Frequenzraums, der das Zentrum des Frequenzraums (auch Ursprung oder Nullpunkt genannt) umfasst, beinhaltet die für das erfindungsgemäße Verfahren relevante Kontrastinformation. Ist der spezifizierte Bereich kleiner als der von den ersten Repräsentationen ausgefüllte Frequenzraum, so ergibt sich für die nachfolgende Vorhersage ein geringerer Rechenaufwand (dies gilt insbesondere auch für das Training des Vorhersagemodells). Durch die Wahl der Größe des Bereichs kann also direkt Einfluss auf den Rechenaufwand genommen werden.

Es prinzipiell auch möglich, einen Bereich zu spezifizieren, der dem gesamten Frequenzraum entspricht, der von den ersten Repräsentationen ausgefüllt wird; in einem solchen Fall findet keine Reduktion auf einen Teilbereich des Frequenzraums statt und der Rechenaufwand ist maximal.

Der Nutzer des erfindungsgemäßen Computersystems kann also durch Spezifizieren eines Bereichs um das Zentrum des Frequenzraums selbst entscheiden, ob er ein Training und eine Vorhersage auf Basis der vollständigen Repräsentationen des Untersuchungsbereichs im Frequenzraum wünscht oder ob er den Rechenaufwand reduzieren möchte. Dabei kann er durch die Größe des spezifizierten Bereichs direkten Einfluss auf den erforderlichen Rechenaufwand ausüben.

Der spezifizierte Bereich hat üblicherweise dieselbe Dimension wie der Frequenzraum: im Fall einer 2D-Repräsentation in einem 2D-Frequenzraum ist der spezifizierte Bereich üblicherweise eine Fläche; im Fall einer 3D-Repräsentation in einem 3D-Frequenzraum ist der spezifizierte Bereich üblicherweise ein Volumen.

Der spezifizierte Bereich kann prinzipiell eine beliebige Form aufweisen; er kann also beispielsweise rund und/oder eckig, konkav und/oder konvex sein. Vorzugsweise ist der Bereich quader- oder würfelförmig im Fall eines 3D-Frequenzraum in einem kartesischen Koordinatensystem und rechteckig oder quadratisch im Fall eines 2D-Frqeunzraums in einem kartesischen Koordinatensystem. Er kann aber auch kugel- oder kreisförmig sein oder eine andere Form aufweisen.

Vorzugsweise fällt der geometrische Schwerpunkt des spezifizierten Bereichs mit dem Zentrum des Frequenzraums zusammen.

Die Repräsentationen, die zum Trainieren, Validieren und zur Vorhersage verwendet werden, werden auf den spezifizierten Bereich reduziert. Dabei bedeutet der Begriff "reduzieren", dass alle Teile einer Repräsentation, die nicht in dem spezifizierten Bereich liegen, weggeschnitten (verworfen) oder durch eine Maske bedeckt werden. Bei der Maskierung werden diejenigen Bereiche, die außerhalb des spezifizierten Bereichs liegen, mit einer Maske bedeckt, so dass nur der spezifizierte Bereich unbedeckt bleibt; bei der Bedeckung mit einer Maske können zum Beispiel die Farbwerte der entsprechenden Pixel/Voxel beispielsweise auf Null (schwarz) gesetzt.

Die so erhaltenen Repräsentationen werden in dieser Beschreibung auch als reduzierte Repräsentationen bezeichnet.

Die nach dem Reduzieren erhaltenen ersten Repräsentationen (reduzierte erste Repräsentationen) werden dem Vorhersagemodell zugeführt: Das Vorhersagemodell ist in einem Trainingsverfahren vorab trainiert worden, den dynamischen Einfluss der Menge an Kontrastmittel auf Repräsentationen des Untersuchungsbereichs im Frequenzraum zu lernen. Im Training werden vorzugsweise ebenfalls reduzierte Repräsentationen (reduzierte erste Repräsentationen und reduzierte zweite Repräsentationen) verwendet.

Das Vorhersagemodell hat also gelernt, welchen dynamischen Einfluss Kontrastmittel auf eine Repräsentation des Untersuchungsbereichs hat und kann dieses gelernte "Wissen" anwenden, um auf Basis der (reduzierten) ersten Repräsentationen eine oder mehrere (reduzierte) zweite Repräsentationen vorherzusagen.

Die eine oder die mehreren vorhergesagten zweiten Repräsentationen repräsentieren den Untersuchungsbereich im Frequenzraum während einer zweiten Zeitspanne.

Die eine oder die mehreren vorhergesagten zweiten Repräsentationen werden von dem Vorhersagemodell auf Basis der (reduzierten) ersten Repräsentationen berechnet und ausgegeben.

Für den Fall, dass die mindestens eine vorhergesagte zweite Repräsentation auf Basis von reduzierten ersten Repräsentationen erzeugt worden ist, ist es nun sinnvoll, die zuvor verworfenen (weggeschnittenen oder mit einer Maske bedeckten) Teile wieder zu ergänzen, um nach Möglichkeit keine Informationen zu Feinstrukturen in der finalen künstlich erzeugten Aufnahme zu verlieren.

Um die zuvor verworfenen (weggeschnittenen oder mit einer Maske bedeckten) Teile wieder zu verwenden, kann die mindestens eine vorgesagte zweite Repräsentation mit mindestens einer empfangenen ersten Repräsentation so überlagert werden, dass die mindestens eine vorgesagte zweite Repräsentation die entsprechenden überlagerten Frequenzbereiche der mindestens einen ursprünglich empfangenen ersten Repräsentation ersetzt. Vorzugsweise ersetzt die vorgesagte zweite Repräsentation die entsprechenden Frequenzbereiche derjenigen ursprünglich empfangenen ersten Repräsentation, die den Untersuchungsbereichs ohne Kontrastmittel repräsentiert.

Das Ersetzen des überlagerten Frequenzbereichs entspricht dem Ergänzen durch einen oder mehrere Bereiche des Frequenzraums der empfangenen ersten Repräsentationen, die beim Reduzieren der ersten Repräsentationen auf den spezifizierten Bereich weggefallen sind.

Mit anderen Worten: der Frequenzraum der mindestens einen vorhergesagten zweiten Repräsentation des Untersuchungsbereichs wird durch diejenigen Bereiche mindestens einer ursprünglich empfangenen ersten Repräsentation aufgefüllt, um die die mindestens eine ursprünglich empfangene erste Repräsentation größer ist als die vorhergesagte zweite Repräsentation.

Durch die Verwendung von Repräsentationen des Untersuchungsbereichs im Frequenzraum ist es also möglich, Kontrastinformationen von Detailinformationen zu separieren, das Training und die Vorhersage auf die Kontrastinformationen zu beschränken und die Detailinformationen dann nach dem Training und/oder der Vorhersage wieder zuzuführen. Dieses Vorgehen reduziert, wie bereits beschrieben, den Rechenaufwand beim Trainieren, Validieren und bei der Vorhersage.

Das Arbeiten im Frequenzraum hat jedoch noch einen weiteren Vorteil gegenüber dem Arbeiten im Ortsraum: die Co-Registrierung der einzelnen Repräsentationen ist im Frequenzraum weniger kritisch als im Ortsraum. Die "Co-Registrierung" (im Stand der Technik auch "Bildregistrierung" genannt) ist ein wichtiger Prozess in der digitalen Bildverarbeitung und dient dazu, zwei oder mehrere Bilder derselben Szene, oder zumindest ähnlicher Szenen, bestmöglich in Übereinstimmung miteinander zu bringen. Dabei wird eines der Bilder als Referenzbild festgelegt, die anderen werden Objektbilder genannt. Um diese Objektbilder optimal an das Referenzbild anzupassen, wird eine ausgleichende Transformation berechnet. Die zu registrierenden Bilder unterscheiden sich voneinander, weil sie von unterschiedlichen Positionen, zu unterschiedlichen Zeitpunkten und/oder mit unterschiedlichen Sensoren aufgenommen wurden.

Im Fall der vorliegenden Erfindung wurden die einzelnen Repräsentationen der Mehrzahl an ersten Repräsentationen des Untersuchungsbereichs zum einen zu unterschiedlichen Zeitpunkten erzeugt; zum anderen unterscheiden sie sich hinsichtlich des Gehalts und der Verteilung an Kontrastmittel im Untersuchungsbereich.

Die Verwendung von Repräsentationen des Untersuchungsbereichs im Frequenzraum hat nun gegenüber der Verwendung von Repräsentationen des Untersuchungsbereichs im Ortsraum den Vorteil, dass die Trainings-, Validierungs- und Vorhersageverfahren toleranter gegenüber Fehlern bei der Bildregistrierung sind. Mit anderen Worten: falls Repräsentationen im Frequenzraum nicht genau überlagert werden, hat dies einen geringeren Einfluss, als wenn Repräsentationen im Ortsraum nicht Pixel/Voxel-genau überlagert werden. Dies folgt aus den Eigenschaften der Fourier-Transformation: wie bereits beschrieben wird die Kontrastinformation von Fourier-transformierten Bildern stets in der Nähe des Ursprungs (Zentrums) des Fourier-Raumes abgebildet. Drehungen oder Rotationen im Bildraum (Ortsraum) führen dazu, dass Bildinformationen (z.B. eine sichtbare Struktur) nach der Transformation in einem anderen Bereich des Bildes lokalisiert sind. Im Fourier-Raum ändern diese Transformationen jedoch nicht den Bereich, in dem die für die vorliegenden Erfindung relevante Kontrastinformation kodiert ist.

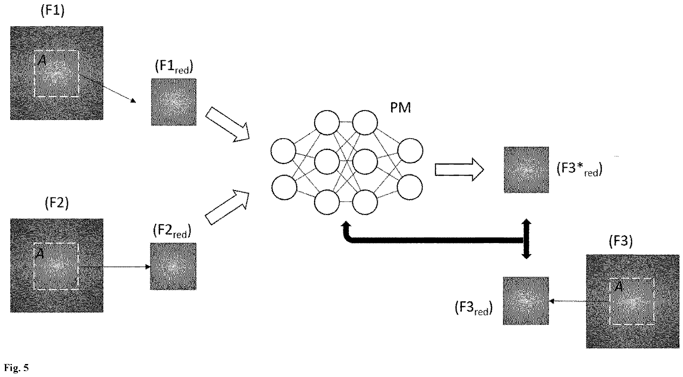

Fig. 5 zeigt beispielhaft und schematisch einen Schritt beim Trainieren eines Vorhersagemodells gemäß einer bevorzugten Ausführungsform der vorliegenden Erfindung.

Es werden zwei erste Repräsentationen (F1) und (F2) eines Untersuchungsobjekts im Frequenzraum und eine zweite Repräsentation (F3) des Untersuchungsobjekts im Frequenzraum empfangen. In den Repräsentationen (F1), (F2) und (F3) wird jeweils derselbe Bereich *A* spezifiziert. Der Bereich *A* umfasst das Zentrum des Frequenzraumes und hat im vorliegenden Fall eine quadratische Form, wobei der geometrische Schwerpunkt des Quadrats mit dem Zentrum des Frequenzraums zusammenfällt. Die Repräsentationen (F1), (F2) und (F3) werden auf den jeweils spezifizierten Bereich *A* reduziert: es ergeben sich drei reduzierte Repräsentationen (F1_{red}), (F2_{red}) und (F3_{red}). Die reduzierten Repräsentationen werden für das Training verwendet. Das Vorhersagemodell wird trainiert, aus den reduzierten Repräsentationen (F1_{red}) und (F2_{red}) die reduzierte Repräsentation (F3_{red}) vorherzusagen. Die reduzierten Repräsentationen (F1_{red}) und (F2_{red}) werden dem Vorhersagemodell (PM) zugeführt und das Vorhersagemodell errechnet eine reduzierte Repräsentation (F3*_{red}), die der reduzierten Repräsentation (F3_{red}) möglichst nahe kommen soll.

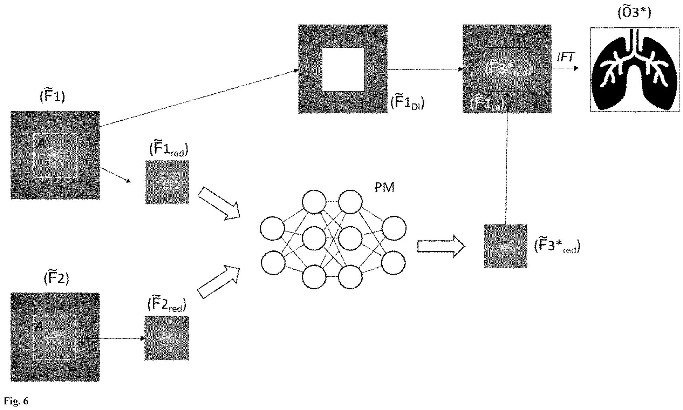

Fig. 6 zeigt beispielhaft und schematisch, wie das in Fig. 5 trainierte Vorhersagemodell für die Vorhersage verwendet werden kann.

Im vorliegenden Beispiel werden zwei erste Repräsentationen (F̃1) und (F̃2) des Untersuchungsbereichs im Frequenzraum empfangen und jeweils auf einen spezifizierten Bereich *A* reduziert. Es ergeben sich zwei reduzierte erste Repräsentationen (F̃1_{red}) und (F̃2_{red}). Die reduzierten ersten Repräsentationen (F̃1_{red}) und (F̃2_{red}) werden dem trainierten Vorhersagemodell (PM) zugeführt. Das trainierte Vorhersagemodell (PM) berechnet aus den reduzierten ersten Repräsentationen (F̃1_{red}) und (F̃2_{red}) eine reduzierte zweite Repräsentation (F̃3_{red}*). Die reduzierte zweite Repräsentation (F̃3_{red}*) wird in einem weiteren Schritt um denjenigen Bereich (F̃1_{DI}) der empfangenen ersten Repräsentation (F̃1) ergänzt, der beim Reduzieren der empfangenen ersten Repräsentation (F̃1) verworfen wurde (um den Bereich, der außerhalb des spezifizierten Bereichs *A* liegt). Wie beschrieben können anstelle von oder in Ergänzung zu Teilen der empfangenen ersten Repräsentation (F̃1) auch Teile der empfangenen zweiten Repräsentation (F̃2) zu der reduzierten dritten Repräsentation (F̃3_{red}*) ergänzt werden.

Aus der ergänzten Repräsentation (F̃3_{red}*) + (F̃1_{DI}) kann durch inverse Fourier-Transformation eine Repräsentation des Untersuchungsbereichs im Ortsraum (Õ3*) erzeugt werden.

Es sei angemerkt, dass auch andere Methoden zur Transformation einer Frequenzraum-Darstellung in eine Ortsraum-Darstellung verwendet werden können, wie z.B. iterative Rekonstruktionsverfahren.

Das erfindungsgemäße Verfahren kann mit Hilfe eines Computersystems ausgeführt werden. Ein Computersystem, das (z.B. mit Hilfe des erfindungsgemäßen Computerprogramms) konfiguriert wurde, das erfindungsgemäße Verfahren auszuführen, ist ein weiterer Gegenstand der vorliegenden Erfindung.

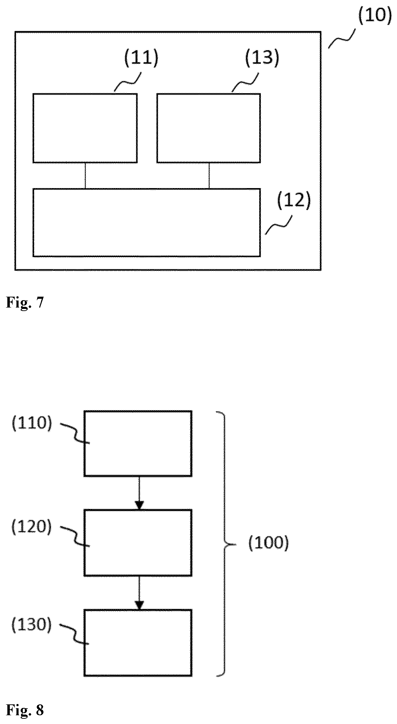

Fig. 7 zeigt schematisch und beispielhaft eine Ausführungsform des erfindungsgemäßen Computersystems. Das Computersystem (10) umfasst eine Empfangseinheit (11), eine Steuer- und Recheneinheit (12) und eine Ausgabeeinheit (13).

Ein "Computersystem" ist ein System zur elektronischen Datenverarbeitung, das mittels programmierbarer Rechenvorschriften Daten verarbeitet. Ein solches System umfasst üblicherweise eine Steuer- und Recheneinheit, oftmals auch als "Computer" bezeichnet, diejenige Einheit, die einen Prozessor zur Durchführung logischer Operationen und einen Arbeitsspeicher zum Laden eines Computerprogramms umfasst, sowie eine Peripherie.

Als "Peripherie" bezeichnet man in der Computertechnik alle Geräte, die an den Computer angeschlossen sind, und zur Steuerung des Computers und/oder als Ein- und Ausgabegeräte dienen. Beispiele hierfür sind Monitor (Bildschirm), Drucker, Scanner, Maus, Tastatur, Joystick, Laufwerke, Kamera, Mikrofon, Lautsprecher etc. Auch interne Anschlüsse und Erweiterungskarten gelten in der Computertechnik als Peripherie.

Computersysteme von heute werden häufig in Desktop-PCs, Portable PCs, Laptops, Notebooks, Netbooks und Tablet-PCs und so genannte Handhelds (z.B. Smartphone) unterteilt; alle diese Systeme können zur Ausführung der Erfindung genutzt werden.

Eingaben in das Computersystem (zum Bespiel zur Steuerung durch einen Nutzer) erfolgen über Eingabemittel wie beispielsweise eine Tastatur, eine Maus, ein Mikrofon, ein berührungsempfindliches Display und/oder dergleichen. Ausgaben erfolgen über die Ausgabeeinheit (13), die insbesondere ein Monitor (Bildschirm), ein Drucker und/oder ein Datenspeicher sein kann.

Das erfindungsgemäße Computersystem (10) ist konfiguriert, aus einer Mehrzahl an ersten Repräsentationen eines Untersuchungsbereichs eines Untersuchungsobjekts im Frequenzraum, die den Untersuchungsbereich während einer ersten Zeitspanne nach einer Applikation eines Kontrastmittels repräsentieren, eine oder mehrere zweite Repräsentationen des Untersuchungsbereichs des Untersuchungsobjekts im Frequenzraum vorherzusagen, wobei die eine oder die mehreren zweiten Repräsentationen den Untersuchungsbereich während einer zweiten Zeitspanne repräsentiert/repräsentieren.

Die Steuer- und Recheneinheit (12) dient der Steuerung der Empfangseinheit (11) und der Ausgabeeinheit (13), der Koordinierung der Daten- und Signalflüsse zwischen den verschiedenen Einheiten, der Prozessierung von Repräsentationen des Untersuchungsbereichs und der Erzeugung von künstlichen radiologischen Aufnahmen. Es ist denkbar, dass mehrere Steuer- und Recheneinheiten vorhanden sind.

Die Empfangseinheit (11) dient zum Empfang von Repräsentationen eines Untersuchungsbereichs. Die Repräsentationen können beispielsweise von einem Magnetresonanztomografen übermittelt werden oder von einem Computertomografen übermittelt werden oder aus einem Datenspeicher ausgelesen werden. Der Magnetresonanztomograf oder der Computertomograf können ein Bestandteil des erfindungsgemäßen Computersystems sein. Denkbar ist aber auch, dass das erfindungsgemäße Computersystem ein Bestandteil eines Magnetresonanztomografen oder eines Computertomografen ist. Die Übermittlung von Repräsentationen kann über eine Netzwerkverbindung oder eine direkte Verbindung erfolgen. Die Übermittlung von Repräsentationen kann über eine Funkverbindung (WLAN, Bluetooth, Mobilfunk und/oder dergleichen) und/oder kabelgebunden erfolgen. Es ist denkbar, dass mehrere Empfangseinheiten vorhanden sind. Auch der Datenspeicher kann ein Bestandteil des erfindungsgemäßen Computersystems sein oder mit diesem z.B. über ein Netzwerk verbunden sein. Es ist denkbar, dass mehrere Datenspeicher vorhanden sind.

Von der Empfangseinheit werden die Repräsentationen und ggf. weitere Daten (wie beispielsweise Informationen zum Untersuchungsobjekt, Aufnahmeparameter und/oder dergleichen) empfangen und an die Steuer- und Recheneinheit übermittelt.

Die Steuer- und Recheneinheit ist konfiguriert, anhand der empfangenen Daten künstliche radiologische Aufnahmen zu erzeugen.

Über die Ausgabeeinheit (13) können die künstlichen radiologischen Aufnahmen angezeigt werden (zum Beispiel auf einem Monitor), ausgegeben werden (z.B. über einen Drucker) oder in einem Datenspeicher gespeichert werden. Es ist denkbar, dass mehrere Ausgabeeinheiten vorhanden sind.

Fig. 8 zeigt beispielhaft in Form eines Ablaufschemas eine bevorzugte Ausführungsform des erfindungsgemäßen Verfahrens zum Trainieren eines Vorhersagemodells.

Das Verfahren (100) umfasst die folgenden Schritte:
(110) Empfangen von Trainingsdaten, wobei die Trainingsdaten für jedes Untersuchungsobjekt einer Vielzahl an Untersuchungsobjekten i) eine Mehrzahl an ersten Referenz-Repräsentationen eines Untersuchungsbereichs im Frequenzraum, von denen zumindest ein Teil den Untersuchungsbereich während einer ersten Zeitspanne nach einer Applikation eines Kontrastmittels repräsentiert, und ii) eine oder mehrere zweite Referenz-Repräsentationen des Untersuchungsbereichs im Frequenzraum, die den Untersuchungsbereich während einer zweiten Zeitspanne repräsentieren, umfasst,
(120) für jedes Untersuchungsobjekt: Zuführen der Mehrzahl an ersten Referenz-Repräsentationen einem Vorhersagemodell, wobei das Vorhersagemodell trainiert wird, eine oder mehrere zweite Referenz-Repräsentationen auf Basis der Mehrzahl an ersten Referenz-Repräsentationen zu erzeugen, wobei das Trainieren das Minimieren einer Fehlerfunktion umfasst, wobei die Fehlerfunktion Abweichungen der generierten zweiten Referenz-Repräsentation(en) von der einen oder den mehreren empfangenen zweite Referenz-Repräsentation(en) quantifiziert,
(130) Ausgeben und/oder Speichern des trainierten Vorhersagemodells und/oder Zuführen des trainierten Vorhersagemodells einem Verfahren zur Vorhersage einer oder mehrerer Repräsentationen des Untersuchungsbereichs eines neuen Untersuchungsobjekts.

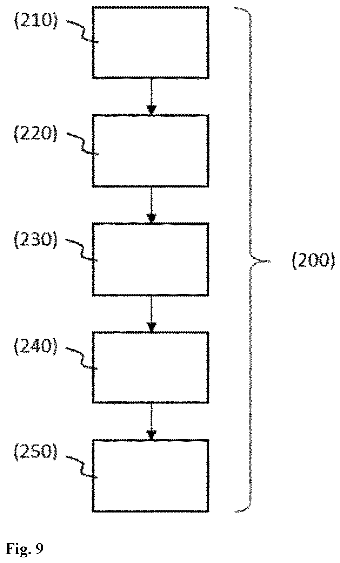

Fig. 9 zeigt beispielhaft in Form eines Ablaufschemas eine weitere bevorzugte Ausführungsform des erfindungsgemäßen Verfahrens zum Trainieren eines Vorhersagemodells.

Das Verfahren (200) umfasst die folgenden Schritte:
(210) Empfangen von Trainingsdaten, wobei die Trainingsdaten für jedes Untersuchungsobjekt einer Vielzahl an Untersuchungsobjekten i) eine Mehrzahl an ersten Referenz-Repräsentationen eines Untersuchungsbereichs im Frequenzraum, von denen zumindest ein Teil den Untersuchungsbereich während einer ersten Zeitspanne nach einer Applikation eines Kontrastmittels repräsentiert, und ii) eine oder mehrere zweite Referenz-Repräsentationen des Untersuchungsbereichs im Frequenzraum, die den Untersuchungsbereich während einer zweiten Zeitspanne repräsentieren, umfasst,
(220) Spezifizieren eines Bereichs in den ersten Referenz-Repräsentationen, wobei der spezifizierte Bereich das Zentrum des Frequenzraums umfasst,
(230) Reduzieren der Referenz-Repräsentationen auf den spezifizierten Bereich, wobei für jedes Untersuchungsobjekt eine Mehrzahl an reduzierten ersten Referenz-Repräsentationen und eine oder mehrere reduzierte zweite Referenz-Repräsentation(en) erhalten werden,
(240) für jedes Untersuchungsobjekt: Zuführen der Mehrzahl an reduzierten ersten Referenz-Repräsentationen einem Vorhersagemodell, wobei das Vorhersagemodell trainiert wird, eine oder mehrere reduzierte zweite Referenz-Repräsentationen auf Basis der Mehrzahl an reduzierten ersten Referenz-Repräsentationen zu erzeugen, wobei das Trainieren das Minimieren einer Fehlerfunktion umfasst, wobei die Fehlerfunktion Abweichungen der generierten reduzierten zweiten Referenz-Repräsentation(en) von der einen oder den mehreren reduzierten zweiten Referenz-Repräsentation(en) der Trainingsdaten quantifiziert,
(250) Ausgeben und/oder Speichern des trainierten Vorhersagemodells und/oder Zuführen des trainierten Vorhersagemodells einem Verfahren zur Vorhersage einer oder mehrerer Repräsentationen des Untersuchungsbereichs eines neuen Untersuchungsobjekts.

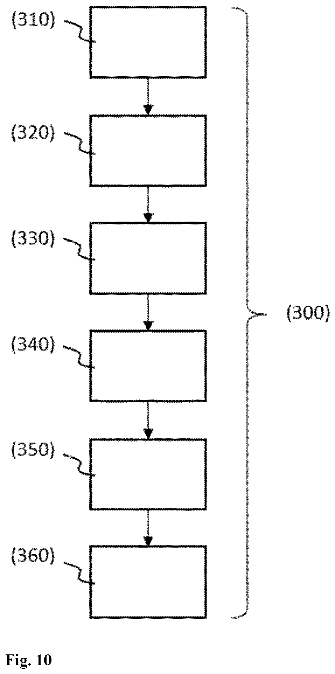

Fig. 10 zeigt beispielhaft in Form eines Ablaufschemas eine bevorzugte Ausführungsform des erfindungsgemäßen Verfahrens zum Vorhersagen einer oder mehrerer Repräsentationen.

Das Verfahren (300) umfasst die folgenden Schritte:
(310) Bereitstellen eines Vorhersagemodells, wobei das Vorhersagemodell nach dem oben beschriebenen Verfahren (100) trainiert worden ist,
(320) Empfangen einer Mehrzahl von ersten Repräsentationen eines Untersuchungsbereichs eines Untersuchungsobjekts im Frequenzraum, wobei zumindest ein Teil der ersten Repräsentationen den Untersuchungsbereich während einer ersten Zeitspanne nach einer Applikation eines Kontrastmittels repräsentiert,
(330) Zuführen der Mehrzahl von ersten Repräsentationen dem Vorhersagemodell,
(340) Empfangen von einer oder von mehreren vorhergesagten Repräsentationen des Untersuchungsbereichs im Frequenzraum von dem Vorhersagemodell, wobei die eine oder die mehreren vorhergesagten Repräsentationen den Untersuchungsbereich während einer zweiten Zeitspanne repräsentieren,
(350) Transformieren der einen oder der mehreren vorhergesagten Repräsentationen in eine oder mehrere Repräsentationen des Untersuchungsbereichs im Ortsraum,
(360) Ausgeben und/oder Speichern der einen oder der mehreren Repräsentationen des Untersuchungsbereichs im Ortsraum.

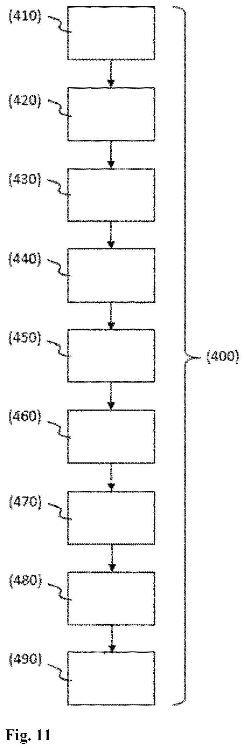

Fig. 11 zeigt beispielhaft in Form eines Ablaufschemas eine weitere bevorzugte Ausführungsform des erfindungsgemäßen Verfahrens zum Vorhersagen einer oder mehrerer Repräsentationen.

Das Verfahren (400) umfasst die folgenden Schritte:
(410) Bereitstellen eines Vorhersagemodells, wobei das Vorhersagemodell nach dem oben beschriebenen Verfahren (200) trainiert worden ist,
(420) Empfangen einer Mehrzahl von ersten Repräsentationen eines Untersuchungsbereichs eines Untersuchungsobjekts im Frequenzraum, wobei zumindest ein Teil der ersten Repräsentationen den Untersuchungsbereich während einer ersten Zeitspanne nach einer Applikation eines Kontrastmittels repräsentiert,
(430) Spezifizieren eines Bereichs in den ersten Repräsentationen, wobei der spezifizierte Bereich das Zentrum des Frequenzraums umfasst,
(440) Reduzieren der ersten Repräsentationen auf den spezifizierten Bereich, wobei eine Mehrzahl an reduzierten ersten Repräsentationen erhalten werden,
(450) Zuführen der Mehrzahl an reduzierten ersten Repräsentationen dem Vorhersagemodell,
(460) Empfangen von einer oder von mehreren zweiten Repräsentationen des Untersuchungsbereichs im Frequenzraum von dem Vorhersagemodell, wobei die eine oder die mehreren zweiten Repräsentationen den Untersuchungsbereich während einer zweiten Zeitspanne repräsentieren,
(470) Ergänzen der einen oder der mehreren zweiten Repräsentationen durch einen oder mehrere Bereiche der empfangenen ersten Repräsentationen, die außerhalb des spezifizierten Bereichs liegen, wobei eine oder mehrere ergänzte zweite Repräsentationen erhalten werden,
(480) Transformieren der einen oder der mehreren ergänzten zweiten Repräsentationen in eine oder mehrere Repräsentationen des Untersuchungsbereichs im Ortsraum,
(490) Ausgeben und/oder Speichern der einen oder der mehreren Repräsentationen des Untersuchungsbereichs im Ortsraum.

Nachfolgend werden einige Beispiele aufgeführt, wie die vorliegende Erfindung genutzt werden kann, um künstliche radiologische Aufnahmen zu erzeugen.

### Beispiel 1

In einer Ausführungsform wird die vorliegende Erfindung verwendet, um ein intravaskuläres Kontrastmittel (auch als Blutpool-Kontrastmittel, engl.: *blood pool (contrast) agent* bezeichnet) zu simulieren.

Bei der Erzeugung von radiologischen Aufnahmen mit einer vergleichsweise langen Akquisitionszeit/Scanzeit, zum Beispiel Aufnahmen unter freier Atmung von Thorax und Abdomen zur Darstellung des Gefäßsystems (z.B. Lungenembolie-Diagnostik unter freier Atmung im MRT), wird ein extrazelluläres Kontrastmittel vergleichsweise schnell aus dem Blutgefäßsystem ausgesondert, so dass der Kontrast schnell sinkt. Es wäre aber vorteilhaft, den Kontrast für einen längeren Zeitraum aufrecht erhalten zu können.

Um dieses Problem zu lösen, werden in einem ersten Schritt eine Mehrzahl an ersten Repräsentationen eines Untersuchungsbereichs im Frequenzraum erzeugt/empfangen, wobei zumindest ein Teil der ersten Repräsentationen den Untersuchungsbereich nach Applikation eines Kontrastmittels repräsentieren.

Bei dem applizierten Kontrastmittel kann es sich um ein extrazelluläres und/oder ein intrazelluläres Kontrastmittel handeln.

Das Kontrastmittel wird vorzugsweise gewichtsadaptiert in ein Blutgefäß des Untersuchungsobjekts eingebracht, beispielsweise in eine Armvene. Von dort bewegt es sich mit dem Blut entlang des Blutkreislaufs.

Der "Blutkreislauf" ist der Weg, den das Blut im Körper des Menschen und der meisten Tiere zurücklegt. Es handelt sich um das Strömungssystem des Blutes, das vom Herzen und von einem Netz aus Blutgefäßen (kardiovaskuläres System, Blutgefäßsystem) gebildet wird.

Ein extrazelluläres Kontrastmittel zirkuliert eine vom Untersuchungsobjekt, dem Kontrastmittel und der verabreichten Menge abhängige Zeitdauer im Blutkreislauf, während es kontinuierlich über die Nieren aus dem Blutkreislauf ausgesondert wird.

Während der Verteilung und/oder Zirkulation des Kontrastmittels in dem Blutgefäßsystem des Untersuchungsobjekts wird mindestens eine erste Repräsentation des Blutgefäßsystems oder eines Teils davon erfasst. Es können mehrere erste Repräsentationen erfasst werden, die verschiedene Phasen der Verteilung des Kontrastmittels in dem Blutgefäßsystem oder in einem Teil davon repräsentieren (z.B. Anflutungsphase, arterielle Phase, venöse Phase und/oder dergleichen). Die Erfassung von mehreren Aufnahmen erlaubt eine spätere Differenzierung von Blutgefäßarten.

Die gemessenen Repräsentationen repräsentieren das Blutgefäßsystem oder einen Teil davon gegenüber dem umliegenden Gewebe kontrastverstärkt. Vorzugsweise zeigt mindestens eine Repräsentation Arterien kontrastverstärkt (arterielle Phase), während mindestens eine weitere Repräsentation Venen kontrastverstärkt zeigt (venöse Phase).

Auf Basis der gemessenen Repräsentationen werden künstliche Repräsentationen erzeugt. Die künstlichen Repräsentationen zeigen vorzugsweise denselben Untersuchungsbereich wie die gemessenen Repräsentationen. Wurde eine Mehrzahl an gemessenen Repräsentationen von dem Untersuchungsbereich zu unterschiedlichen Zeitpunkten nach der Applikation des Kontrastmittels erfasst, so zeigen insbesondere die späteren Repräsentationen Blutgefäße mit einem zunehmend sinkenden Kontrast gegenüber dem umliegenden Gewebe, da das Kontrastmittel allmählich aus den Blutgefäßen ausgesondert wird. Die künstlichen Repräsentationen zeigen die Blutgefäße hingegen mit einem gleichbleibend hohen Kontrast gegenüber dem umliegenden Gewebe.

Dies wird dadurch erreicht, dass die gemessenen Repräsentationen dem erfindungsgemäßen Vorhersagemodell zugeführt werden, das vorab trainiert worden ist, auf Basis von gemessenen Repräsentationen, die eine zeitliche variierende Kontrastverstärkung von Blutgefäßen zeigen, mehrere Repräsentationen vorherzusagen, die eine zeitlich konstante Kontrastverstärkung von Blutgefäßen zeigen.

Die Referenzdaten, die zum Trainieren und Validieren eines solchen Vorhersagemodells verwendet werden, umfassen üblicherweise gemessene Repräsentationen des Untersuchungsbereichs nach der Applikation eines extrazellulären oder intrazellulären Kontrastmittels. Die Referenzdaten können ferner Repräsentationen des Untersuchungsbereichs nach der Applikation eines Blutpool-Kontrastmittels umfassen. Solche Referenzdaten können beispielsweise in einer klinischen Studie ermittelt werden. Als intravaskuläres Kontrastmittel kann in einer solchen klinischen Studie beispielsweise Ferumoxytol verwendet werden. Ferumoxytol ist ein kolloidaler Eisen-Kohlenhydrat-Komplex, der zur parenteralen Behandlung eines Eisenmangels bei einer chronischen Nierenerkrankung zugelassen ist, wenn eine orale Therapie nicht durchführbar ist. Ferumoxytol wird als intravenöse Injektion verabreicht. Ferumoxytol ist als Lösung zur intravenösen Injektion im Handel unter dem Markennamen Rienso^{®} oder Ferahme^{®} erhältlich. Der Eisen-Kohlenhydrat-Komplex zeigt superparamagnetische Eigenschaften und kann daher (*off label*) zur Kontrastverstärkung in MRT-Untersuchungen eingesetzt werden (siehe z.B.: L.P. Smits et al.: Evaluation of ultrasmall superparamagnetic iron-oxide (USPIO) enhanced MRI with ferumoxytol to quantify arterial wall inflammation, Atherosclerosis 2017, 263: 211-218).

Ebenso ist denkbar, Repräsentationen nach Applikation des intravaskulären Kontrastmittels Ablavar^{®} als Trainingsdaten zu verwenden.

Ebenso ist es denkbar, die Referenz-Repräsentationen, die Blutgefäße im Untersuchungsbereich mit einer über die Zeit konstanten Kontrastverstärkung zeigen, synthetisch zu erzeugen, z.B. mittels Segmentierverfahren auf Basis der ersten Repräsentationen. Segmentierverfahren sind vielfältig in der Literatur beschrieben. Beispielhaft seien die folgenden Publikationen aufgeführt: F. Conversano et al.: Hepatic Vessel Segmentation for 3D Planning of Liver Surgery, Acad Radiol 2011, 18: 461-470; S. Moccia et al.: Blood vessel segmentation algorithms - Review of methods, datasets and evaluation metries, Computer Methods and Programs in Biomedicine 158 (2018) 71-91; M. Marcan et al.: Segmentation of hepatic vessels from MRI images for planning of electroporation-based treatments in the liver, Radiol Oncol 2014; 48(3): 267-281; T. A. Hope et al.: Improvement of Gadoxetate Arterial Phase Capture With a High Spatio-Temporal Resolution Multiphase Three-Dimensional SPGR-Dixon Sequence, Journal of Magnetic Resonsnce Imaging 38: 938-945 (2013); WO2009/135923A1, US6754376B1, WO2014/162273A1, WO2017/139110A1, WO2007/053676A2, EP2750102A1).

Das trainierte Vorhersagemodell erzeugt dann auf Basis der zugeführten ersten Repräsentationen zweite Repräsentationen, die eine zeitlich konstante Kontrastverstärkung der Blutgefäße zeigen.

### Beispiel 2

In einer bevorzugten Ausführungsform wird die vorliegende Erfindung verwendet, um eine oder mehrere künstliche MRT-Aufnahmen bei der dynamischen kontrastverstärkenden Magnetresonanztomographie zu erzeugen (vorherzusagen).

Im nachfolgenden Text wird der Begriff "Aufnahme" verwendet. Eine "Aufnahme" ist eine Repräsentation im Sinne der vorliegenden Erfindung. Bei einer Aufnahme kann es sich um eine Repräsentation im Ortsraum oder um eine Repräsentation im Frequenzraum handeln. Für das Trainieren des Vorhersagemodells und für die Vorhersage werden stets Repräsentationen im Frequenzraum verwendet; also zum Beispiel k-Raum-Daten. Falls jedoch messtechnisch Repräsentationen im Ortsraum erzeugt werden, können diese beispielsweise mittels Fourier-Transformation in Repräsentationen im Frequenzraum umgewandelt werden, bevor sie dem Training und/oder der Vorhersage zugeführt werden.

Der Untersuchungsbereich wird in ein Grundmagnetfeld eingebracht. Der Untersuchungsbereich wird einem MRT-Verfahren unterzogen und dabei wird eine Mehrzahl von MRT-Aufnahmen erzeugt, die den Untersuchungsbereich während einer ersten Zeitspanne zeigen. Diese während der ersten Zeitspanne messtechnisch erzeugten MRT-Aufnahmen werden in dieser Beschreibung auch als erste MRT-Aufnahmen bezeichnet.

Der Begriff Mehrzahl bedeutet, dass mindestens zwei (erste) MRT-Aufnahmen, vorzugsweise mindestens drei (erste), ganz besonders bevorzugt mindestens vier (erste) MRT-Aufnahmen erzeugt werden.

Dem Untersuchungsobjekt wird ein Kontrastmittel verabreicht, das sich in dem Untersuchungsbereich verteilt. Das Kontrastmittel wird vorzugsweise intravenös als Bolus gewichtsadaptiert verabreicht (zum Beispiel in eine Armvene).

Vorzugsweise ist das Kontrastmittel ein hepatobiliäres Kontrastmittel wie beispielsweise Gd-EOB-DTPA oder Gd-BOPTA. In einer besonders bevorzugten Ausführungsform handelt es sich bei dem Kontrastmittel um einen Stoff oder ein Stoffgemisch mit der Gadoxetsäure oder einem Salz der Gadoxetsäure als kontrastverstärkenden Wirkstoff. Ganz besonders bevorzugt handelt es sich um das Dinatriumsalz der Gadoxetsäure (Gd-EOB-DTPA Dinatrium).

Die erste Zeitspanne umfasst vorzugsweise das Anfluten des Untersuchungsbereichs mit dem Kontrastmittel. Vorzugsweise umfasst die erste Zeitspanne die arterielle Phase und/oder die portalvenöse Phase und/oder die Spätphase bei der dynamischen kontrastverstärkenden Magnetresonanztomographie einer Leber oder eines Teils einer Leber eines Untersuchungsobjekts. Die genannten Phasen sind beispielsweise in den folgenden Publikationen definiert und beschrieben: J. Magn. Reson. Imaging, 2012, 35(3): 492-511, doi:10.1002/jmri.22833; Clujul Medical, 2015, Vol. 88 no. 4: 438-448, DOI: 10.15386/cjmed-414; Journal of Hepatology, 2019, Vol. 71: 534-542, http://dx.doi.org/10.1016/j.jhep.2019.05.005).

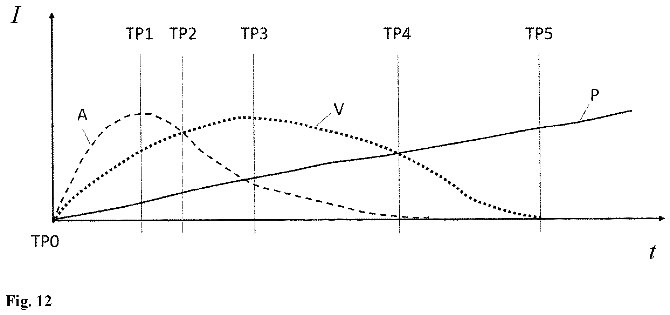

Fig. 12 zeigt schematisch den zeitlichen Verlauf der Konzentrationen von Kontrastmittel in Leberarterien (A), Lebervenen (V) und gesunden Leberzellen (P) nach einer Applikation eines hepatobiliäres Kontrastmittels in eine Armvene eines Menschen. Die Konzentrationen sind in Form der Signalintensitäten I in den genannten Arealen (Leberarterien, Lebervenen, Leberzellen) bei der Magnetresonanzmessung als Funktion der Zeit t dargestellt. Bei einer intravenösen Bolusinjektion steigt die Konzentration des Kontrastmittels in den Leberarterien (A) als erstes an (gestrichelte Kurve). Die Konzentration durchläuft ein Maximum und sinkt dann ab. Die Konzentration in den Lebervenen (V) steigt langsamer an als in den Leberarterien und erreicht ihr Maximum später (gepunktete Kurve). Die Konzentration des Kontrastmittels in den gesunden Leberzellen (P) steigt langsam an (durchgezogene Kurve) und erreicht ihr Maximum erst zu einem sehr viel späteren Zeitpunkt (das Maximum ist in der Fig. 12 nicht dargestellt). Es lassen sich einige charakteristische Zeitpunkte definieren: Zum Zeitpunkt TP0 wird Kontrastmittel intravenös als Bolus appliziert. Zum Zeitpunkt TP1 erreicht die Konzentration (die Signalintensität) des Kontrastmittels in den Leberarterien ihr Maximum. Zum Zeitpunkt TP2 schneiden sich die Kurven der Signalintensitäten bei den Leberarterien und den Lebervenen. Zum Zeitpunkt TP3 durchläuft die Konzentration (die Signalintensität) des Kontrastmittels in den Lebervenen ihr Maximum. Zum Zeitpunkt TP4 schneiden sich die Kurven der Signalintensitäten bei den Leberarterien und den Leberzellen. Zum Zeitpunkt T5 sind die Konzentrationen in den Leberarterien und den Lebervenen auf ein Niveau gesunken, bei dem sie keine messbare Kontrastverstärkung mehr verursachen.

In einer bevorzugten Ausführungsform wird die erste Zeitspanne so gewählt, dass solche MRT-Aufnahmen von der Leber oder einem Teil der Leber eines Untersuchungsobjekts erzeugt werden,
(i) die den Untersuchungsbereich ohne Kontrastmittel zeigen,
(ii) die den Untersuchungsbereich während der arteriellen Phase zeigen, in der das Kontrastmittel sich über die Arterien in dem Untersuchungsbereich ausbreitet,
(iii) die den Untersuchungsbereich während der portalvenösen Phase zeigen, in der das Kontrastmittel über die Pfortader in den Untersuchungsbereich gelangt, und
(iv) die den Untersuchungsbereich während der Spätphase zeigen, in der die Konzentration des Kontrastmittels in den Arterien und Venen zurückgeht und die Konzentration des Kontrastmittels in den Leberzellen ansteigt.

Vorzugsweise beginnt die erste Zeitspanne in einer Zeitspanne von einer Minute bis einer Sekunde vor der Applikation des Kontrastmittels, oder mit der Applikation des Kontrastmittels, und dauert ab der Applikation des Kontrastmittels eine Zeitspanne von 2 Minuten bis 15 Minuten, vorzugsweise 2 Minuten bis 13 Minuten, noch mehr bevorzugt 3 Minuten bis 10 Minuten. Da das Kontrastmittel renal und biliär sehr langsam ausgeschieden wird, kann sich die zweite Zeitspanne bis zu zwei Stunden und mehr nach der Applikation des Kontrastmittels hinziehen.

In einer bevorzugten Ausführungsform umfasst die erste Zeitspanne zumindest die Zeitpunkte TP0, TP1, TP2, TP3 und TP4.

In einer bevorzugten Ausführungsform werden mindestens MRT-Aufnahmen von allen folgenden Phasen (messtechnisch) erzeugt: in einer Zeitspanne vor TP0, in der Zeitspanne von TP0 bis TP1, in der Zeitspanne von TP1 bis TP2, in der Zeitspanne von TP2 bis TP3 und in der Zeitspanne TP3 bis TP4.

Es ist denkbar, dass in den Zeitspannen vor TP0, von TP0 bis TP1, von TP1 bis TP2, von TP2 bis TP3 und von TP3 bis TP4 jeweils eine oder mehrere MRT-Aufnahmen (messtechnisch) erzeugt werden.

Auf Basis der (messtechnisch) während der ersten Zeitspanne erzeugten (ersten) MRT-Aufnahmen wird eine zweite MRT-Aufnahme oder es werden mehrere zweite MRT-Aufnahmen, die den Untersuchungsbereich während einer zweiten Zeitspanne zeigen, vorhergesagt. MRT-Aufnahmen, die für die zweite Zeitspanne vorhergesagt werden, werden in dieser Beschreibung auch als zweite MRT-Aufnahmen bezeichnet.

In einer bevorzugten Ausführungsform der vorliegenden Erfindung schließt sich die zweite Zeitspanne an die erste Zeitspanne an.

Bei der zweiten Zeitspanne handelt es sich vorzugsweise um eine Zeitspanne innerhalb der hepatobiliären Phase; vorzugsweise um eine Zeitspanne, die mindestens 10 Minuten nach Applikation des Kontrastmittels einsetzt, vorzugsweise mindestens 20 Minuten nach Applikation des Kontrastmittels.

Die Vorhersage der mindestens einen zweiten Repräsentation, die den Untersuchungsbereich während der zweiten Zeitspanne repräsentiert, erfolgt mit Hilfe des erfindungsgemäßen Vorhersagemodells. Das Vorhersagemodell ist vorab trainiert worden, auf Basis einer Mehrzahl an ersten MRT-Aufnahmen, die einen Untersuchungsbereich während der ersten Zeitspanne zeigen, eine oder mehrere MRT-Aufnahmen vorherzusagen, die den Untersuchungsbereich während der zweiten Zeitspanne zeigen.

Das hier beschriebene Beispiel ist schematisch auch in Fig. 1(b) dargestellt.

### Beispiel 3

In einer weiteren bevorzugten Ausführungsform der vorliegenden Erfindung wird die vorliegende Erfindung verwendet, um Läsionen in der Leber von Blutgefäßen zu unterscheiden. Bei T1-gewichteten MRT-Aufnahmen führt Primovist^{®} 10-20 Minuten nach der Injektion (in der hepatobiliären Phase) zu einer deutlichen Signalverstärkung im gesunden Leberparenchym, während Läsionen, die keine oder nur wenige Hepatozyten enthalten, z.B. Metastasen oder mittelgradig bis schlecht differenzierte hepatozelluläre Karzinome (HCCs), als dunklere Bereiche auftreten. Allerdings treten in der hepatobiliären Phase auch die Blutgefäße als dunkle Bereiche auf, so dass in den MRT-Aufnahmen, die während der hepatobiliären Phase erzeugt werden, eine Differenzierung von Leberläsionen und Blutgefäßen allein anhand des Kontrasts nicht möglich ist.

Die vorliegende Erfindung kann verwendet werden, um künstliche MRT-Aufnahmen einer Leber oder eines Teils einer Leber eines Untersuchungsobjekts zu erzeugen, in denen der Kontrast zwischen den Blutgefäßen in der Leber und den Leberzellen künstlich minimiert ist, um Leberläsionen besser erkennbar werden zu lassen.

Eine "Aufnahme" ist eine Repräsentation im Sinne der vorliegenden Erfindung. Bei einer Aufnahme kann es sich um eine Repräsentation im Ortsraum oder um eine Repräsentation im Frequenzraum handeln. Für das Trainieren des Vorhersagemodell und für die Vorhersage werden stets Repräsentationen im Frequenzraum verwendet. Es können aber messtechnisch Repräsentationen im Ortsraum erzeugt werden, die dann beispielsweise mittels Fourier-Transformation in Repräsentationen im Frequenzraum umgewandelt werden, bevor sie dem Training und/oder der Vorhersage zugeführt werden.

Die Mehrzahl an ersten Repräsentationen umfasst mindestens eine Repräsentation des Untersuchungsbereichs, in der Blutgefäße erkennbar sind, die vorzugsweise durch ein Kontrastmittel kontrastverstärkt dargestellt sind (Blutgefäß-Repräsentation).

Bei Verwendung eines paramagnetischen Kontrastmittels sind die Blutgefäße in einer solchen Repräsentation aufgrund der Kontrastverstärkung durch eine hohe Signalintensität gekennzeichnet (signalreiche Darstellung). Diejenigen (zusammenhängenden) Strukturen innerhalb einer solchen Repräsentation, die eine Signalintensität innerhalb einer empirisch ermittelbaren Bandbreite aufweisen, lassen sich damit Blutgefäßen zuordnen. Damit liegt mit einer solchen Repräsentation eine Information darüber vor, wo in einer Ortsraumdarstellung Blutgefäße dargestellt sind bzw. welche Strukturen in einer Ortsraumdarstellung auf Blutgefäße (Arterien und/oder Venen) zurückzuführen sind.

Die Mehrzahl an ersten Repräsentationen umfasst ferner mindestens eine Repräsentation des Untersuchungsbereichs, in der gesunde Leberzellen kontrastverstärkt dargestellt sind (Leberzellen-Repräsentation), z.B. eine Repräsentation des Untersuchungsbereichs, die während der hepatobiliären Phase aufgenommen wurde.

Die Information aus der mindestens einen Blutgefäß-Repräsentation über die Blutgefäße wird mit der Information aus der mindestens einen Leberzellen-Repräsentation kombiniert. Dabei wird mindestens eine Repräsentation (künstlich) erzeugt (berechnet), bei der der Kontrastunterschied zwischen Strukturen, die auf Blutgefäße zurückzuführen sind und Strukturen, die auf gesunde Leberzellen zurückzuführen sind, nivelliert ist.

Der Begriff "Nivellieren" bedeutet hier "Angleichen" oder "Minimieren". Das Ziel des Nivellierens ist, die Grenzen zwischen Blutgefäßen und gesunden Leberzellen in der künstlich erzeugten Repräsentation verschwinden zu lassen, und Blutgefäße und gesunde Leberzellen in der künstlich erzeugten Repräsentation wie ein einheitliches Gewebe erscheinen zu lassen, von dem sich Leberläsionen strukturell durch einen anderen Kontrast abheben.

Üblicherweise wird eine (Anzahl = 1) künstliche Repräsentation auf Basis einer (Anzahl = 1) Blutgefäß-Repräsentation und einer (Anzahl = 1) Leberzellen-Repräsentation vorhergesagt.

Es ist denkbar, dass neben mindestens einer Blutgefäß-Repräsentation und mindestens einer Leberzellen-Repräsentation auch noch mindestens eine native Repräsentation verwendet wird, um die mindestens eine künstliche Repräsentation vorherzusagen.

In einer Ausführungsform umfasst das Erzeugen der künstlichen Repräsentation die folgenden Schritte:
- Zuführen der mindestens einen Blutgefäß-Repräsentation und der mindestens einen Leberzellen-Repräsentation einem Vorhersagemodell, wobei das Vorhersagemodell anhand von Referenz-Repräsentationen mittels überwachten Lernens trainiert worden ist, aus mindestens einer Referenz-Blutgefäß-Repräsentation und mindestens einer Referenz-Leberzellen-Repräsentation mindestens eine künstliche Repräsentation zu erzeugen, wobei bei der mindestens einen künstlichen Repräsentation der Kontrastunterschied zwischen Strukturen, die auf Blutgefäße zurückzuführen sind, und Strukturen, die auf gesunde Leberzellen zurückzuführen sind, nivelliert ist,
- Empfangen mindestens einer künstlichen Repräsentation als Ausgabe von dem Vorhersagemodell.

### Beispiel 4

In einer weiteren Ausführungsform wird die vorliegende Erfindung verwendet, um eine native MRT-Aufnahme der Leber zu erzeugen. Dabei werden eine oder es werden mehrere künstliche MRT-Aufnahme(n) einer Leber oder eines Teils einer Leber eines Untersuchungsobjekts erzeugt, die die Leber oder den Teil der Leber ohne eine durch ein Kontrastmittel herbeigeführte Kontrastverstärkung zeigen. Die künstliche(n) MRT-Aufnahme(n) wird/werden auf der Basis von MRT-Aufnahmen erstellt, die alle mit einer durch ein Kontrastmittel herbeigeführten Kontrastverstärkung aufgenommen wurden.

Eine "Aufnahme" ist eine Repräsentation im Sinne der vorliegenden Erfindung. Bei einer Aufnahme kann es sich um eine Repräsentation im Ortsraum oder um eine Repräsentation im Frequenzraum handeln. Für das Trainieren des Vorhersagemodell und für die Vorhersage werden stets Repräsentationen im Frequenzraum verwendet. Es können aber messtechnisch Repräsentationen im Ortsraum erzeugt werden, die dann beispielsweise mittels Fourier-Transformation in Repräsentationen im Frequenzraum umgewandelt werden, bevor sie dem Training und/oder der Vorhersage zugeführt werden.

Der Untersuchungsbereich wird in ein Grundmagnetfeld eingebracht. Dem Untersuchungsobjekt wird ein Kontrastmittel verabreicht, das sich in dem Untersuchungsbereich verteilt. Das Kontrastmittel wird vorzugsweise intravenös (zum Beispiel in eine Armvene) als Bolus, gewichtsadaptiert verabreicht. Vorzugsweise ist das Kontrastmittel ein hepatobiliäres Kontrastmittel wie beispielsweise Gd-EOB-DTPA oder Gd-BOPTA. In einer besonders bevorzugten Ausführungsform handelt es sich bei dem Kontrastmittel um einen Stoff oder ein Stoffgemisch mit der Gadoxetsäure oder einem Salz der Gadoxetsäure als kontrastverstärkenden Wirkstoff. Ganz besonders bevorzugt handelt es sich um das Dinatriumsalz der Gadoxetsäure (Gd-EOB-DTPA Dinatrium).

Es werden eine Mehrzahl an ersten Repräsentationen des Untersuchungsbereichs erzeugt, die den Untersuchungsbereich in einer ersten Zeitspanne nach der Applikation des Kontrastmittels repräsentieren. Vorzugsweise handelt es sich bei der Mehrzahl an ersten Repräsentationen um T1-gewichtete Darstellungen.

Vorzugsweise umfasst die Mehrzahl an ersten Repräsentationen mindestens eine Repräsentation des Untersuchungsbereichs, die den Untersuchungsbereich während der dynamischen Phase repräsentiert, z.B. mindestens eine Repräsentation, die den Untersuchungsbereich während der arteriellen Phase, der venösen Phase und/oder während der Spätphase repräsentiert (siehe z.B. Fig. 12 und die Erläuterungen dazu in Beispiel 2). Bei Verwendung eines paramagnetischen Kontrastmittels sind die Blutgefäße in solchen Repräsentationen aufgrund der Kontrastverstärkung durch eine hohe Signalintensität gekennzeichnet (signalreiche Darstellung).

Vorzugsweise umfasst die Mehrzahl an ersten Repräsentationen ferner mindestens eine Repräsentation des Untersuchungsbereichs, die den Untersuchungsbereich während der hepatobiliären Phase repräsentiert. Während der hepatobiliären Phase wird das gesunde Lebergewebe (Parenchym) kontrastverstärkt dargestellt.

MRT-Untersuchungen der dynamischen und der hepatobiliären Phase ziehen sich über eine vergleichsweise lange Zeitspanne hin. Über diese Zeitspanne sollten Bewegungen des Patienten vermieden werden, um Bewegungsartefakte in radiologischen Aufnahmen zu minimieren. Die lang andauernde Bewegungseinschränkung kann für einen Patienten unangenehm sein. Daher etablieren sich mittlerweile verkürzte MRT-Aufnahmevorgehen, bei denen ein Kontrastmittels bereits eine gewisse Zeitspanne (d.h. 10 bis 20 Minuten) vor der MRT-Aufnahme dem Untersuchungsobjekt appliziert wird, um direkt MRT-Aufnahmen innerhalb der hepatobiliären Phase aufnehmen zu können. MRT-Aufnahmen der dynamischen Phase erfolgen dann im gleichen MRT-Aufnahmevorgang nach Applikation einer zweiten Dosis des Kontrastmittels. Im Vergleich zu einem konventionellen MRT-Aufnahmevorgang ist dadurch die Verweildauer eines Patienten bzw. eines Untersuchungsobjektes im MRT deutlich kürzer. Daher wird erfindungsgemäß bevorzugt die mindestens eine Repräsentation der Leber oder des Teils der Leber in der hepatobiliären Phase nach einer (ersten) Applikation eines ersten Kontrastmittels in das Untersuchungsobjekt aufgezeichnet und mindestens eine weitere Repräsentation derselben Leber oder des Teils derselben Leber in der dynamischen Phase nach Applikation eines zweiten Kontrastmittels oder einer zweiten Applikation des ersten Kontrastmittels in das gleiche Untersuchungsobjekt aufgezeichnet. Das erste Kontrastmittel ist dabei ein hepatobiliäres, paramagnetisches Kontrastmittel. Das zweite Kontrastmittel kann auch ein extrazelluläres, paramagnetisches Kontrastmittel sein.

Die ersten Repräsentationen des Untersuchungsbereichs werden dann dem erfindungsgemäßen Vorhersagemodell zugeführt. Das Vorhersagemodell ist vorab trainiert worden, auf Basis der empfangenden ersten Repräsentationen, eine oder mehrere zweite Repräsentationen vorherzusagen, die die Leber oder einen Teil der Leber des Untersuchungsobjekts ohne eine durch ein Kontrastmittel herbeigeführte Kontrastverstärkung zeigen. Das Vorhersagemodell wurde vorzugsweise mit Hilfe eines selbstlernenden Algorithmus in einem überwachten maschinellen Lernen erstellt. Zum Lernen werden Trainingsdaten verwendet, die eine Mehrzahl an Repräsentationen des Untersuchungsbereichs während der dynamischen Phase und der hepatobiliären Phase der Leber oder eines Teils der Leber von einer Vielzahl an Untersuchungsobjekten umfassen. Ferner umfassen die Trainingsdaten auch Repräsentationen des Untersuchungsbereichs, bei denen keine Kontrastverstärkung vorlag, d.h. die ohne Applikation eines Kontrastmittels generiert wurden.

Das hier beschriebene Beispiel ist schematisch auch in Fig. 1(c) dargestellt.

### Beispiel 5

In einer weiteren bevorzugten Ausführungsform wird die vorliegende Erfindung verwendet, um die Untersuchungszeit eines Patienten bei der dynamischen kontrastverstärkten Magnetresonanztomografie der Leber zu reduzieren.

Dabei wird Kontrastmittel in Form von zwei Boli verabreicht. Die erste Applikation erfolgt zu einem Zeitpunkt, bei dem sich das Untersuchungsobjekt noch nicht im Kernspintomographen befindet. Bei der ersten Applikation wird ein erstes Kontrastmittel verabreicht. Das erste Kontrastmittel wird vorzugsweise intravenös als Bolus, gewichtsadaptiert verabreicht (z.B. in eine Armvene). Das erste Kontrastmittel ist vorzugsweise ein hepatobiliäres Kontrastmittel wie beispielsweise Gd-EOB-DTPA oder Gd-BOPTA. In einer besonders bevorzugten Ausführungsform handelt es sich bei dem ersten Kontrastmittel um einen Stoff oder ein Stoffgemisch mit der Gadoxetsäure oder einem Salz der Gadoxetsäure als kontrastverstärkenden Wirkstoff. Ganz besonders bevorzugt handelt es sich um das Dinatriumsalz der Gadoxetsäure (Gd-EOB-DTPA Dinatrium).

Nach der Applikation des ersten Kontrastmittels kann eine Zeitspanne gewartet werden, bevor das Untersuchungsobjekt in den Kernspintomographen eingebracht und zu einem ersten Zeitpunkt eine erste MRT-Aufnahme erzeugt wird.

Eine "Aufnahme" ist eine Repräsentation im Sinne der vorliegenden Erfindung. Bei einer Aufnahme kann es sich um eine Repräsentation im Ortsraum oder um eine Repräsentation im Frequenzraum handeln. Für das Trainieren des Vorhersagemodell und für die Vorhersage werden stets Repräsentationen im Frequenzraum verwendet. Es können aber messtechnisch Repräsentationen im Ortsraum erzeugt werden, die dann beispielsweise mittels Fourier-Transformation in Repräsentationen im Frequenzraum umgewandelt werden, bevor sie dem Training und/oder der Vorhersage zugeführt werden.

Die Zeitspanne zwischen der ersten Applikation und der Erzeugung der ersten MRT-Aufnahme liegt vorzugsweise im Bereich von 5 Minuten bis 1 Stunde, noch mehr bevorzugt im Bereich von 10 Minuten bis 30 Minuten am meisten bevorzugt im Bereich von 8 Minuten bis 25 Minuten.

Die erste MRT-Aufnahme repräsentiert die Leber oder einen Teil der Leber des Untersuchungsobjekts während der hepatobiliären Phase nach der Applikation des ersten Kontrastmittels. Dabei sind gesunde Leberzellen infolge der Applikation des ersten Kontrastmittels in der ersten MRT-Aufnahme kontrastverstärkt dargestellt.

Die hepatobiliäre Phase, in der die erste MRT-Aufnahme erzeugt wird, wird in dieser Beschreibung auch als erste hepatobiliäre Phase bezeichnet. Das erste Kontrastmittel hat die gesunden Leberzellen erreicht und führt zu einer Kontrastverstärkung, bei einem paramagnetischen Kontrastmittel zu einer Signalverstärkung der gesunden Leberzellen. Während der arteriellen Phase, der portalvenösen Phase und der Spätphase, die nach der Applikation des ersten Kontrastmittels eintreten, werden keine MRT-Aufnahmen erzeugt. Die arterielle Phase, die portalvenöse Phase und die Spätphase, die nach der Applikation des ersten Kontrastmittels eintreten, werden in dieser Beschreibung auch als erste arterielle Phase, erste portalvenöse Phase und erste Spätphase bezeichnet.

Es ist denkbar, dass mehrere MRT-Aufnahmen während der ersten hepatobiliären Phase erzeugt werden.

Nach der Erzeugung einer oder mehrerer erster MRT-Aufnahmen während der ersten hepatobiliären Phase wird ein zweites Mal Kontrastmittel appliziert. Beim zweiten Mal wird ein zweites Kontrastmittel appliziert. Bei dem zweiten Kontrastmittel kann es sich um das gleiche Kontrastmittel handeln wie das erste Kontrastmittel; es kann sich bei dem zweiten Kontrastmittel aber auch um ein anderes, vorzugsweise ein extrazelluläres Kontrastmittel handeln. Das zweite Kontrastmittel wird ebenfalls vorzugsweise intravenös als Bolus, gewichtsadaptiert verabreicht (z.B. in eine Armvene).

Die Applikation des ersten Kontrastmittels wird in dieser Beschreibung auch als erste Applikation bezeichnet; die Applikation des zweiten Kontrastmittels wird in dieser Beschreibung auch als zweite Applikation bezeichnet. Sind das erste Kontrastmittel und das zweite Kontrastmittel gleich, dann erfolgt also eine erste Applikation eines hepatobiliären Kontrastmittels und zu einem späteren Zeitpunkt eine zweite Applikation des hepatobiliären Kontrastmittels. Sind das erste Kontrastmittel und das zweite Kontrastmittel verschieden, erfolgt eine erste Applikation eines ersten Kontrastmittels, wobei es sich bei dem ersten Kontrastmittel um ein hepatobiliäres Kontrastmittel handelt, und es erfolgt zu einem späteren Zeitpunkt eine zweite Applikation eines zweiten (anderen) Kontrastmittels.

Zum Zeitpunkt der zweiten Applikation (bzw. zum Zeitpunkt der Applikation des zweiten Kontrastmittels) befindet sich das Untersuchungsobjekt vorzugsweise bereits in dem Kernspintomographen. Nach der Applikation des zweiten Kontrastmittels wird wiederum eine arterielle Phase, eine portalvenöse Phase und eine Spätphase durchlaufen. Diese arterielle Phase, portalvenöse Phase und Spätphase werden in dieser Beschreibung auch als zweite arterielle Phase, zweite portalvenöse Phase und zweite Spätphase bezeichnet. In der zweiten arteriellen Phase und/oder in der zweiten portalvenösen Phase und/oder in der zweiten Spätphase wird eine MRT-Aufnahme oder es werden mehrere MRT-Aufnahmen erzeugt. Diese MRT-Aufnahmen werden in der Reihenfolge ihrer Aufnahme als zweite, dritte, vierte usw. bezeichnet.

In einer bevorzugten Ausführungsform wird eine zweite MRT-Aufnahme während der zweiten arteriellen Phase, eine dritte MRT-Aufnahme während der zweiten portalvenösen Phase und eine vierte MRT-Aufnahme während der zweiten Spätphase erzeugt. Eine solche zweite MRT-Aufnahme zeigt insbesondere Arterien kontrastverstärkt; eine solche dritte MRT-Aufnahme zeigt insbesondere Venen kontrastverstärkt.

Denkbar ist ferner, dass während der genannten Phasen mehr als eine MRT-Aufnahme erzeugt werden.

Aus den MRT-Aufnahmen, die während einer oder mehrerer Phasen nach der Applikation des ersten und des zweiten Kontrastmittels erzeugt wurden, können dann künstliche MRT-Aufnahmen berechnet werden.

Das Ziel der Erzeugung von künstlichen MRT-Aufnahmen aus den gemessenen MRT-Aufnahmen ist, den Kontrast zwischen gesundem Lebergewebe und anderen Bereichen zu erhöhen. Bei Verwendung eines hepatobiliären paramagnetischen Kontrastmittels als erstes Kontrastmittel ist die Signalintensität von gesundem Lebergewebe während der zweiten arteriellen Phase, der zweiten portalvenösen Phase und der zweiten Spätphase noch infolge der Applikation des ersten Kontrastmittels erhöht. Das zweite Kontrastmittel, das sich in den genannten zweiten Phasen ausbreitet, führt in dem Gewebe, in dem es sich ausbreitet, ebenfalls zu einem erhöhten Signal. Damit besteht in den MRT-Aufnahmen zwischen dem gesunden Lebergewebe und dem übrigen durch (zweites) Kontrastmittel kontrastverstärkten Gewebe nur ein geringer Kontrast. Um diesen Kontrast zu erhöhen, wird mindestens eine künstliche MRT-Aufnahme mit Hilfe eines Vorhersagemodells erzeugt, die den Untersuchungsbereich so zeigen würde, wie er in der dynamischen Phase nach Applikation des ersten Kontrastmittels ausgesehen hat oder wie er aussehen würde, wenn nur das zweite Kontrastmittel appliziert worden wäre: die Blutgefäße sind infolge der Applikation des zweiten Kontrastmittels kontrastverstärkt dargestellt, aber gesunde Leberzellen sind nicht infolge der Applikation eines ersten Kontrastmittels kontrastverstärkt dargestellt. Mit anderen Worten, es wird eine künstliche MRT-Aufnahme erzeugt, dass so aussieht wie die zweite MRT-Aufnahme, mit dem Unterschied, dass die Kontrastverstärkung der gesunden Leberzellen, die durch die Applikation des ersten Kontrastmittels verursacht worden ist, aus der zweiten MRT-Aufnahme herausgerechnet (eliminiert) wird.

Das hier beschriebene Beispiel ist schematisch auch in Fig. 1(d) dargestellt.

## Patentansprüche

1. Computer-implementiertes Verfahren umfassend die Schritte
- Empfangen einer Mehrzahl von ersten Repräsentationen (F̃1, F̃2) eines Untersuchungsbereichs eines Untersuchungsobjekts im Frequenzraum, wobei zumindest ein Teil der ersten Repräsentationen (F̃1, F̃2) den Untersuchungsbereich während einer ersten Zeitspanne nach einer Applikation eines Kontrastmittels repräsentiert,
- Zuführen der Mehrzahl von ersten Repräsentationen (F̃1, F̃2) einem Vorhersagemodell (PM), wobei das Vorhersagemodell (PM) anhand von ersten Referenz-Repräsentationen (F1, F2) des Untersuchungsbereichs einer Vielzahl an Untersuchungsobjekten trainiert worden ist, aus den ersten Referenz-Repräsentationen (F1, F2), von denen zumindest ein Teil den Untersuchungsbereich während einer ersten Zeitspanne nach einer Applikation eines Kontrastmittels im Frequenzraum repräsentiert, eine oder mehrere zweite Referenz-Repräsentationen (F3*) zu erzeugen, die den Untersuchungsbereich während einer zweiten Zeitspanne im Frequenzraum repräsentieren, wobei die zweite Zeitspanne zeitlich nach der ersten Zeitspanne liegt,
- Empfangen von einer oder von mehreren vorhergesagten Repräsentationen (F̃3*) des Untersuchungsbereichs im Frequenzraum von dem Vorhersagemodell (PM), wobei die eine oder die mehreren vorhergesagten Repräsentationen (F̃3*) den Untersuchungsbereich während einer zweiten Zeitspanne repräsentieren, wobei die zweite Zeitspanne zeitlich nach der ersten Zeitspanne liegt,
- Transformieren der einen oder der mehreren vorhergesagten Repräsentationen (F̃3*) in eine oder mehrere Repräsentationen (Õ3*) des Untersuchungsbereichs im Ortsraum,
- Ausgeben der einen oder der mehreren Repräsentationen (Õ3*) des Untersuchungsbereichs im Ortsraum.

2. Verfahren gemäß Anspruch 1, wobei die Mehrzahl von ersten Repräsentationen (F̃1, F̃2)
- mindestens eine Repräsentation (F̃1) des Untersuchungsbereichs im Frequenzraum umfasst, die den Untersuchungsbereich vor der Applikation des Kontrastmittels repräsentiert, und
- mindestens eine Repräsentation (F̃2) des Untersuchungsbereichs im Frequenzraum umfasst, die den Untersuchungsbereich in der ersten Zeitspanne nach der Applikation des Kontrastmittels repräsentiert,
und wobei die eine oder die mehreren vorhergesagten Repräsentationen (F̃3*) den Untersuchungsbereich in der zweiten Zeitspanne repräsentieren, wobei die zweite Zeitspanne der ersten Zeitspanne zeitlich nachgelagert ist.

3. Verfahren gemäß Anspruch 1, wobei die mehreren vorhergesagten Repräsentationen (F3*) den Untersuchungsbereich in der zweiten Zeitspanne mit einer über die Zeit gleichbleibenden Kontrastverstärkung repräsentieren.

4. Verfahren gemäß einem der Ansprüche 1 bis 3, wobei das Vorhersagemodell (PM) ein künstliches neuronales Netz ist oder ein solches umfasst.

5. Verfahren gemäß einem der Ansprüche 1 bis 4, wobei es sich bei den ersten Repräsentationen (F̃1, F̃2) des Untersuchungsbereichs im Frequenzraum um k-Raum-Daten einer magnetresonanztomografischen Untersuchung handelt.

6. Verfahren gemäß einem der Ansprüche 1 bis 4, wobei in einem ersten Schritt eine Mehrzahl an radiologischen Aufnahmen des Untersuchungsbereichs im Ortsraum empfangen werden und diese empfangenen radiologischen Aufnahmen durch Fourier-Transformation in die ersten Repräsentationen (F̃1, F̃2) des Untersuchungsbereichs im Frequenzraum umgewandelt werden.

7. Verfahren gemäß einem der Ansprüche 1 bis 6, umfassend die Schritte:
- Empfangen einer Mehrzahl von ersten Repräsentationen (F̃1, F̃2) eines Untersuchungsbereichs eines Untersuchungsobjekts im Frequenzraum, wobei zumindest ein Teil der ersten Repräsentationen (F̃1, F̃2) den Untersuchungsbereich während einer ersten Zeitspanne nach einer Applikation eines Kontrastmittels repräsentiert,
- Spezifizieren eines Bereichs (*A*) in den ersten Repräsentationen, wobei der spezifizierte Bereich (*A*) das Zentrum des Frequenzraums umfasst,
- Reduzieren der ersten Repräsentationen (F̃1, F̃2) auf den spezifizierten Bereich,
- Zuführen der Mehrzahl von reduzierten ersten Repräsentationen (F̃1_{red}, F̃2_{red}) einem Vorhersagemodell (PM),
- Empfangen von einer oder von mehreren zweiten Repräsentationen (F̃3*_{red}) des Untersuchungsbereichs im Frequenzraum von dem Vorhersagemodell (PM), wobei die eine oder die mehreren zweiten Repräsentationen (F̃3*_{red}) den Untersuchungsbereich während einer zweiten Zeitspanne repräsentieren, wobei die zweite Zeitspanne zeitlich nach der ersten Zeitspanne liegt,
- Ergänzen der einen oder der mehreren zweiten Repräsentationen (F̃3*_{red}) durch einen oder mehrere Bereiche (F̃1_{DI}) der empfangenen ersten Repräsentationen (F̃1, F̃2), die außerhalb des spezifizierten Bereichs (*A*) liegen,
- Transformieren der einen oder der mehreren ergänzten zweiten Repräsentationen in eine oder mehrere Repräsentationen (Õ3*) des Untersuchungsbereichs im Ortsraum,
- Ausgeben der einen oder der mehreren Repräsentationen (Õ3*) des Untersuchungsbereichs im Ortsraum.

8. Verfahren gemäß einem der Ansprüche 1 bis 7, wobei das Transformieren der einen oder der mehreren ergänzten zweiten Repräsentationen in eine oder mehrere Repräsentationen des Untersuchungsbereichs (Õ3*) im Ortsraum mittels inverser Fourier-Transformation (*iFT*) erfolgt.

9. System (10) umfassend
• eine Empfangseinheit (11),
• eine Steuer- und Recheneinheit (12) und
• eine Ausgabeeinheit (13),
wobei die Steuer- und Recheneinheit (12) konfiguriert ist,
- die Empfangseinheit (11) zu veranlassen, eine Mehrzahl von ersten Repräsentationen (F̃1, F̃2) eines Untersuchungsbereichs eines Untersuchungsobjekts im Frequenzraum zu empfangen, wobei zumindest ein Teil der ersten Repräsentationen (F̃1, F̃2) den Untersuchungsbereich während einer ersten Zeitspanne nach einer Applikation eines Kontrastmittels repräsentiert,
- die Mehrzahl von ersten Repräsentationen (F̃1, F̃2) einem Vorhersagemodell (PM) zuzuführen, wobei das Vorhersagemodell (PM) anhand von ersten Referenz-Repräsentationen (F1, F2) des Untersuchungsbereichs einer Vielzahl an Untersuchungsobjekten trainiert worden ist, aus den ersten Referenz- Repräsentationen (F1, F2), von denen zumindest ein Teil den Untersuchungsbereich während einer ersten Zeitspanne nach einer Applikation eines Kontrastmittels im Frequenzraum repräsentiert, eine oder mehrere zweite Referenz-Repräsentationen (F3*) zu erzeugen, die den Untersuchungsbereich während einer zweiten Zeitspanne im Frequenzraum repräsentieren, wobei die zweite Zeitspanne zeitlich nach der ersten Zeitspanne liegt,
- von dem Vorhersagemodell (PM) eine oder mehrere vorhergesagte Repräsentationen (F̃3*) des Untersuchungsbereichs im Frequenzraum zu empfangen, wobei die eine oder die mehreren vorhergesagten Repräsentationen (F̃3*) den Untersuchungsbereich während einer zweiten Zeitspanne repräsentieren, wobei die zweite Zeitspanne zeitlich nach der ersten Zeitspanne liegt,
- die eine oder die mehreren vorhergesagten Repräsentationen (F̃3*) in eine oder mehrere Repräsentationen (Õ3*) des Untersuchungsbereichs im Ortsraum zu transformieren,
- die Ausgabeeinheit (13) zu veranlassen, die eine oder die mehreren Repräsentationen (Õ3*) des Untersuchungsbereichs im Ortsraum auszugeben.

10. Computerprogrammprodukt umfassend ein Computerprogramm, das in einen Arbeitsspeicher eines Computersystems (10) geladen werden kann und dort das Computersystem (10) dazu veranlasst, folgende Schritte ausführen:
- Empfangen einer Mehrzahl von ersten Repräsentationen (F̃1, F̃2) eines Untersuchungsbereichs eines Untersuchungsobjekts im Frequenzraum, wobei zumindest ein Teil der ersten Repräsentationen (F̃1, F̃2) den Untersuchungsbereich während einer ersten Zeitspanne nach einer Applikation eines Kontrastmittels repräsentiert,
- Zuführen der Mehrzahl von ersten Repräsentationen (F̃1, F̃2) einem Vorhersagemodell (PM), wobei das Vorhersagemodell (PM) anhand von ersten Referenz-Repräsentationen (F1, F2) des Untersuchungsbereichs einer Vielzahl an Untersuchungsobjekten trainiert worden ist, aus den ersten Referenz-Repräsentationen (F1, F2), von denen zumindest ein Teil den Untersuchungsbereich während einer ersten Zeitspanne nach einer Applikation eines Kontrastmittels im Frequenzraum repräsentiert, eine oder mehrere zweite Referenz-Repräsentationen (F3*) zu erzeugen, die den Untersuchungsbereich während einer zweiten Zeitspanne im Frequenzraum repräsentieren, wobei die zweite Zeitspanne zeitlich nach der ersten Zeitspanne liegt,
- Empfangen von einer oder von mehreren vorhergesagten Repräsentationen (F̃3*) des Untersuchungsbereichs im Frequenzraum von dem Vorhersagemodell (PM), wobei die eine oder die mehreren vorhergesagten Repräsentationen (F̃3*) den Untersuchungsbereich während einer zweiten Zeitspanne repräsentieren, wobei die zweite Zeitspanne zeitlich nach der ersten Zeitspanne liegt,
- Transformieren der einen oder der mehreren vorhergesagten Repräsentationen (F̃3*) in eine oder mehrere Repräsentationen (Õ3*) des Untersuchungsbereichs im Ortsraum,
- Ausgeben der einen oder der mehreren Repräsentationen (Õ3*) des Untersuchungsbereichs im Ortsraum.

11. Verwendung eines Kontrastmittels in einem Verfahren zur Vorhersage mindestens einer radiologischen Aufnahme, wobei das Verfahren die folgenden Schritte umfasst:
- Applizieren des Kontrastmittels, wobei sich das Kontrastmittel in einem Untersuchungsbereich eines Untersuchungsobjekts verteilt,
- Erzeugen einer Mehrzahl von ersten Repräsentationen (F̃1, F̃2) des Untersuchungsbereichs des Untersuchungsobjekts im Frequenzraum, wobei zumindest ein Teil der ersten Repräsentationen (F̃1, F̃2) den Untersuchungsbereich während einer ersten Zeitspanne nach einer Applikation des Kontrastmittels repräsentiert,
- Zuführen der Mehrzahl von ersten Repräsentationen (F̃1, F̃2) einem Vorhersagemodell (PM), wobei das Vorhersagemodell (PM) anhand von ersten Referenz-Repräsentationen (F1, F2) des Untersuchungsbereichs einer Vielzahl an Untersuchungsobjekten trainiert worden ist, aus den ersten Referenz- Repräsentationen (F1, F2), von denen zumindest ein Teil den Untersuchungsbereich während einer ersten Zeitspanne nach einer Applikation eines Kontrastmittels im Frequenzraum repräsentiert, eine oder mehrere zweite Referenz-Repräsentationen (F3*) zu erzeugen, die den Untersuchungsbereich während einer zweiten Zeitspanne im Frequenzraum repräsentieren, wobei die zweite Zeitspanne zeitlich nach der ersten Zeitspanne liegt,
- Empfangen von einer oder von mehreren vorhergesagten Repräsentationen (F̃3*) des Untersuchungsbereichs im Frequenzraum von dem Vorhersagemodell (PM), wobei die eine oder die mehreren vorhergesagten Repräsentationen (F̃3*) den Untersuchungsbereich während einer zweiten Zeitspanne repräsentieren, wobei die zweite Zeitspanne zeitlich nach der ersten Zeitspanne liegt,
- Transformieren der einen oder der mehreren vorhergesagten Repräsentationen (F̃3*) in eine oder mehrere Repräsentationen (Õ3*) des Untersuchungsbereichs im Ortsraum,
- Ausgeben der einen oder der mehreren Repräsentationen (Õ3*) des Untersuchungsbereichs im Ortsraum.

## Claims

1. Computer-implemented method comprising the steps of
- receiving a plurality of first representations (F̃1, F̃2) of an examination region of an examination object in frequency space, at least some of the first representations (F̃1, F̃2) representing the examination region during a first time span after administration of a contrast agent,
- feeding the plurality of first representations (F̃1, F̃2) to a prediction model (PM), the prediction model (PM) having been trained on the basis of first reference representations (F1, F2) of the examination region of a multiplicity of examination objects to generate from the first reference representations (F1, F2), of which at least some represent the examination region during a first time span after administration of a contrast agent in frequency space, one or more second reference representations (F3*) which represent the examination region during a second time span in frequency space, the second time span coming after the first time span,
- receiving one or more predicted representations (F̃3*) of the examination region in frequency space from the prediction model (PM), the one or more predicted representations (F̃3*) representing the examination region during a second time span, the second time span coming after the first time span,
- transforming the one or more predicted representations (F̃3*) into one or more representations (Õ3*) of the examination region in real space,
- outputting the one or more representations (Õ3*) of the examination region in real space.

2. Method according to Claim 1, wherein the plurality of first representations (F̃1, F̃2)
- comprises at least one representation (F̃1) of the examination region in frequency space that represents the examination region before administration of the contrast agent and
- comprises at least one representation (F̃2) of the examination region in frequency space that represents the examination region in the first time span after administration of the contrast agent,
and wherein the one or more predicted representations (F̃3*) represent the examination region in the second time span, the second time span coming after the first time span.

3. Method according to Claim 1, wherein the multiple predicted representations (F̃3*) represent the examination region in the second time span with a contrast enhancement that is constant over time.

4. Method according to any of Claims 1 to 3, wherein the prediction model (PM) is an artificial neural network or comprises such a network.

5. Method according to any of Claims 1 to 4, wherein the first representations (F̃1, F̃2) of the examination region in frequency space are k-space data of a magnetic resonance imaging examination.

6. Method according to any of Claims 1 to 4, wherein a plurality of radiological images of the examination region in real space are received in a first step and these received radiological images are converted by Fourier transform into the first representations (F̃1, F̃2) of the examination region in frequency space.

7. Method according to any of Claims 1 to 6, comprising the steps of:
- receiving a plurality of first representations (F̃1, F̃2) of an examination region of an examination object in frequency space, at least some of the first representations (F̃1, F̃2) representing the examination region during a first time span after administration of a contrast agent,
- specifying a region (*A*) in the first representations, the specified region (*A*) comprising the centre of the frequency space,
- reducing the first representations (F̃1, F̃2) to the specified region,
- feeding the plurality of reduced first representations (F̃1_{red}, F̃2_{red}) to a prediction model (PM),
- receiving one or more second representations (F̃3*_{red}) of the examination region in frequency space from the prediction model (PM), the one or more second representations (F̃3*_{red}) representing the examination region during a second time span, the second time span coming after the first time span,
- supplementing the one or more second representations (F̃3*_{red}) by one or more regions (F̃1_{DI}) of the received first representations (F̃1, F̃2) that lie outside the specified region (*A*),
- transforming the one or more supplemented second representations into one or more representations (Õ3*) of the examination region in real space,
- outputting the one or more representations (Õ3*) of the examination region in real space.

8. Method according to any of Claims 1 to 7, wherein the one or more supplemented second representations are transformed into one or more representations of the examination region (Õ3*) in real space by means of inverse Fourier transform (*iFT*)*.*

9. System (10) comprising
• a receiving unit (11),
• a control and calculation unit (12) and
• an output unit (13),
wherein the control and calculation unit (12) is configured
- to cause the receiving unit (11) to receive a plurality of first representations (F̃1, F̃2) of an examination region of an examination object in frequency space, at least some of the first representations (F̃1, F̃2) representing the examination region during a first time span after administration of a contrast agent,
- to feed the plurality of first representations (F̃1, F̃2) to a prediction model (PM), the prediction model (PM) having been trained on the basis of first reference representations (F1, F2) of the examination region of a multiplicity of examination objects to generate from the first reference representations (F1, F2), of which at least some represent the examination region during a first time span after administration of a contrast agent in frequency space, one or more second reference representations (F3*) which represent the examination region during a second time span in frequency space, the second time span coming after the first time span,
- to receive one or more predicted representations (F̃3*) of the examination region in frequency space from the prediction model (PM), the one or more predicted representations (F̃3*) representing the examination region during a second time span, the second time span coming after the first time span,
- to transform the one or more predicted representations (F̃3*) into one or more representations (Õ3*) of the examination region in real space,
- to cause the output unit (13) to output the one or more representations (Õ3*) of the examination region in real space.

10. Computer program product comprising a computer program that can be loaded into a working memory of a computer system (10), where it causes the computer system (10) to execute the following steps:
- receiving a plurality of first representations (F̃1, F̃2) of an examination region of an examination object in frequency space, at least some of the first representations (F̃1, F̃2) representing the examination region during a first time span after administration of a contrast agent,
- feeding the plurality of first representations (F̃1, F̃2) to a prediction model (PM), the prediction model (PM) having been trained on the basis of first reference representations (F1, F2) of the examination region of a multiplicity of examination objects to generate from the first reference representations (F1, F2), of which at least some represent the examination region during a first time span after administration of a contrast agent in frequency space, one or more second reference representations (F3*) which represent the examination region during a second time span in frequency space, the second time span coming after the first time span,
- receiving one or more predicted representations (F̃3*) of the examination region in frequency space from the prediction model (PM), the one or more predicted representations (F̃3*) representing the examination region during a second time span, the second time span coming after the first time span,
- transforming the one or more predicted representations (F̃3*) into one or more representations (Õ3*) of the examination region in real space,
- outputting the one or more representations (Õ3*) of the examination region in real space.

11. Use of a contrast agent in a method for predicting at least one radiological image, the method comprising the following steps:
- administering the contrast agent, the contrast agent spreading in an examination region of an examination object,
- generating a plurality of first representations (F̃1, F̃2) of the examination region of the examination object in frequency space, at least some of the first representations (F̃1, F̃2) representing the examination region during a first time span after administration of the contrast agent,
- feeding the plurality of first representations (F̃1, F̃2) to a prediction model (PM), the prediction model (PM) having been trained on the basis of first reference representations (F1, F2) of the examination region of a multiplicity of examination objects to generate from the first reference representations (F1, F2), of which at least some represent the examination region during a first time span after administration of a contrast agent in frequency space, one or more second reference representations (F3*) which represent the examination region during a second time span in frequency space, the second time span coming after the first time span,
- receiving one or more predicted representations (F̃3*) of the examination region in frequency space from the prediction model (PM), the one or more predicted representations (F̃3*) representing the examination region during a second time span, the second time span coming after the first time span,
- transforming the one or more predicted representations (F̃3*) into one or more representations (Õ3*) of the examination region in real space,
- outputting the one or more representations (Õ3*) of the examination region in real space.

## Revendications

1. Procédé mis en œuvre par ordinateur, comprenant les étapes consistant à
- recevoir une pluralité de premières représentations (F̃1, F̃2) d'une région d'examen d'un objet d'examen dans le domaine fréquentiel, au moins une partie des premières représentations (F̃1, F̃2) représentant la région d'examen pendant une première période après l'application d'un agent de contraste,
- fournir la pluralité de premières représentations (F̃1, F̃2) à un modèle de prédiction (PM), le modèle de prédiction (PM) ayant été entraîné sur la base de premières représentations de référence (F1, F2) de la région d'examen d'une pluralité d'objets d'examen, parmi les premières représentations de référence (F1, F2), dont au moins une partie représente la région d'examen pendant une première période dans le domaine fréquentiel, pour générer une ou plusieurs secondes représentations de référence (F3*) représentant la région d'examen pendant une seconde période dans le domaine fréquentiel, la seconde période étant postérieure à la première période,
- recevoir, en provenance du modèle de prédiction (PM), une ou plusieurs représentations prédites (F̃3*) de la région d'examen dans le domaine fréquentiel, lesdites une ou plusieurs représentations prédites (F̃3*) représentant la région d'examen pendant une seconde période, la seconde période étant postérieure à la première période,
- transformer lesdites une ou plusieurs représentations prédites (F̃3*) en une ou plusieurs représentations (Õ3*) de la région d'examen dans le domaine spatial,
- fournir en sortie lesdites une ou plusieurs représentations (Õ3*) de la région d'examen dans le domaine spatial.

2. Procédé selon la revendication 1, dans lequel la pluralité de premières représentations (F̃1, F̃2) comprend :
- au moins une représentation (F̃1) de la région d'examen dans le domaine fréquentiel, qui représente la région d'examen avant l'application de l'agent de contraste, et
- au moins une représentation (F̃2) de la région d'examen dans le domaine fréquentiel, qui représente la région d'examen pendant la première période après l'application de l'agent de contraste,
et dans lequel lesdites une ou plusieurs représentations prédites (F̃3*) représentent la région d'examen pendant la seconde période, la seconde période étant postérieure à la première période.

3. Procédé selon la revendication 1, dans lequel lesdites plusieurs représentations prédites (F̃3*) représentent la région d'examen pendant la seconde période avec une amélioration de contraste constante dans le temps.

4. Procédé selon l'une quelconque des revendications 1 à 3, dans lequel le modèle de prédiction (PM) est ou comprend un réseau neuronal artificiel.

5. Procédé selon l'une quelconque des revendications 1 à 4, dans lequel les premières représentations (F̃1, F̃2) de la région d'examen dans le domaine fréquentiel sont des données d'espace k d'un examen tomographique par résonance magnétique.

6. Procédé selon l'une quelconque des revendications 1 à 4, dans lequel, lors d'une première étape, une pluralité d'images radiologiques de la région d'examen dans le domaine spatial sont reçues, et ces images radiologiques reçues sont transformées en les premières représentations (F̃1, F̃2) de la région d'examen dans le domaine fréquentiel par transformation de Fourier.

7. Procédé selon l'une quelconque des revendications 1 à 6, comprenant les étapes consistant à :
- recevoir une pluralité de premières représentations (F̃1, F̃2) d'une région d'examen d'un objet d'examen dans le domaine fréquentiel, au moins une partie des premières représentations (F̃1, F̃2) représentant la région d'examen pendant une première période après l'application d'un agent de contraste,
- spécifier une région (*A*) dans les représentations de référence, la région spécifiée (*A*) comprenant le centre du domaine fréquentiel,
- réduire les premières représentations (F̃1, F̃2) à la région spécifiée,
- fournir la pluralité de premières représentations réduites (F̃1_{red}, F̃2_{red}) à un modèle de prédiction (PM),
- recevoir, en provenance du modèle de prédiction (PM), une ou plusieurs secondes représentations prédites (F̃3*) de la région d'examen dans le domaine fréquentiel, lesdites une ou plusieurs secondes représentations prédites (F̃3*) représentant la région d'examen pendant une seconde période, la seconde période étant postérieure à la première période,
- compléter lesdites une ou plusieurs secondes représentations (F̃3*_{red}) par une ou plusieurs régions (F̃1_{DI}) des premières représentations (F̃1, F̃2) reçues, qui se situent en dehors de la région spécifiée (*A*),
- transformer lesdites une ou plusieurs secondes représentations complétées en une ou plusieurs représentations (Õ3*) de la région d'examen dans le domaine spatial,
- fournir en sortie lesdites une ou plusieurs représentations (Õ3*) de la région d'examen dans le domaine spatial.

8. Procédé selon l'une quelconque des revendications 1 à 7, dans lequel la transformation desdites une ou plusieurs secondes représentations complétées en une ou plusieurs représentations de la région d'examen (Õ3*) dans le domaine spatial s'effectue au moyen d'une transformation de Fourier inverse (*iFT*)*.*

9. Système (10) comprenant
• une unité de réception (11),
• une unité (12) de commande et de calcul, et
• une unité de sortie (13),
l'unité de commande et de calcul (12) étant configurée pour
- amener l'unité de réception (11) à recevoir une pluralité de premières représentations (F̃1, F̃2) d'une région d'examen d'un objet d'examen dans le domaine fréquentiel, au moins une partie des premières représentations (F̃1, F̃2) représentant la région d'examen pendant une première période après l'application d'un agent de contraste,
- fournir la pluralité de premières représentations (F̃1, F̃2) à un modèle de prédiction (PM), le modèle de prédiction (PM) ayant été entraîné sur la base de premières représentations de référence (F1, F2) de la région d'examen d'une pluralité d'objets d'examen, parmi les premières représentations de référence (F1, F2), dont au moins une partie représente la région d'examen pendant une première période dans le domaine fréquentiel, pour générer une ou plusieurs secondes représentations de référence (F̃3*) représentant la région d'examen pendant une seconde période dans le domaine fréquentiel, la seconde période étant postérieure à la première période,
- recevoir, en provenance du modèle de prédiction (PM), une ou plusieurs représentations prédites (F̃3*) de la région d'examen dans le domaine fréquentiel, lesdites une ou plusieurs représentations prédites (F̃3*) représentant la région d'examen pendant une seconde période, la seconde période étant postérieure à la première période,
- transformer lesdites une ou plusieurs représentations prédites (F̃3*) en une ou plusieurs représentations (Õ3*) de la région d'examen dans le domaine spatial,
- amener l'unité de sortie (13) à fournir en sortie lesdites une ou plusieurs représentations (Õ3*) de la région d'examen dans le domaine spatial.

10. Produit programme d'ordinateur comprenant un programme d'ordinateur qui est apte à être chargé dans une mémoire de travail d'un système d'ordinateur (10) et qui, dans celui-ci, amène le système d'ordinateur (10) à mettre en œuvre les étapes suivantes :
- recevoir une pluralité de premières représentations (F̃1, F̃2) d'une région d'examen d'un objet d'examen dans le domaine fréquentiel, au moins une partie des premières représentations (F̃1, F̃2) représentant la région d'examen pendant une première période après l'application d'un agent de contraste,
- fournir la pluralité de premières représentations (F̃1, F̃2) à un modèle de prédiction (PM), le modèle de prédiction (PM) ayant été entraîné sur la base de premières représentations de référence (F1, F2) de la région d'examen d'une pluralité d'objets d'examen, parmi les premières représentations de référence (F1, F2), dont au moins une partie représente la région d'examen pendant une première période dans le domaine fréquentiel, pour générer une ou plusieurs secondes représentations de référence (F3*) représentant la région d'examen pendant une seconde période dans le domaine fréquentiel, la seconde période étant postérieure à la première période,
- recevoir, en provenance du modèle de prédiction (PM), une ou plusieurs représentations prédites (F̃3*) de la région d'examen dans le domaine fréquentiel, lesdites une ou plusieurs représentations prédites (F̃3*) représentant la région d'examen pendant une seconde période, la seconde période étant postérieure à la première période,
- transformer lesdites une ou plusieurs représentations prédites (F̃3*) en une ou plusieurs représentations (Õ3*) de la région d'examen dans le domaine spatial,
- fournir en sortie lesdites une ou plusieurs représentations (Õ3*) de la région d'examen dans le domaine spatial.

11. Utilisation d'un agent de contraste dans un procédé de prédiction d'au moins une image radiologique, le procédé comprenant les étapes suivantes :
- appliquer l'agent de contraste, l'agent de contraste se répartissant dans une région d'examen d'un objet d'examen,
- générer une pluralité de premières représentations (F̃1, F̃2) d'une région d'examen d'un objet d'examen dans le domaine fréquentiel, au moins une partie des premières représentations (F̃1, F̃2) représentant la région d'examen pendant une première période après l'application de l'agent de contraste,
- fournir la pluralité de premières représentations (F̃1, F̃2) à un modèle de prédiction (PM), le modèle de prédiction (PM) ayant été entraîné sur la base de premières représentations de référence (F1, F2) de la région d'examen d'une pluralité d'objets d'examen, parmi les premières représentations de référence (F1, F2), dont au moins une partie représente la région d'examen pendant une première période dans le domaine fréquentiel, pour générer une ou plusieurs secondes représentations de référence (F3*) représentant la région d'examen pendant une seconde période dans le domaine fréquentiel, la seconde période étant postérieure à la première période,
- recevoir, en provenance du modèle de prédiction (PM), une ou plusieurs représentations prédites (F̃3*) de la région d'examen dans le domaine fréquentiel, lesdites une ou plusieurs représentations prédites (F̃3*) représentant la région d'examen pendant une seconde période, la seconde période étant postérieure à la première période,
- transformer lesdites une ou plusieurs représentations prédites (F̃3*) en une ou plusieurs représentations (Õ3*) de la région d'examen dans le domaine spatial,
- fournir en sortie lesdites une ou plusieurs représentations (Õ3*) de la région d'examen dans le domaine spatial.
